(19) Europäisches Patentamt
European Patent Office
Office européen des brevets

(11) **EP 4 460 118 A1**

(12) **EUROPEAN PATENT APPLICATION**
published in accordance with Art. 153(4) EPC

(43) Date of publication:
**06.11.2024 Bulletin 2024/45**

(21) Application number: **22916684.8**

(22) Date of filing: **27.12.2022**

(51) International Patent Classification (IPC):
*H04W 64/00* (2009.01)     *H04W 24/10* (2009.01)
*H04W 72/20* (2023.01)     *H04W 4/40* (2018.01)

(52) Cooperative Patent Classification (CPC):
**H04W 4/40; H04W 24/10; H04W 64/00;**
**H04W 72/04; H04W 72/20**

(86) International application number:
**PCT/KR2022/021366**

(87) International publication number:
**WO 2023/128543 (06.07.2023 Gazette 2023/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2021 KR 20210193541**

(71) Applicant: **Innovative Technology Lab Co., Ltd.**
**Seocho-gu, Seoul 06744 (KR)**

(72) Inventor: **YOON, Sung Jun**
**Seoul 06744 (KR)**

(74) Representative: **Diehl & Partner**
**Patent- und Rechtsanwaltskanzlei mbB**
**Erika-Mann-Straße 9**
**80636 München (DE)**

(54) **METHOD AND DEVICE FOR PERFORMING SIDELINK POSITIONING ON BASIS OF SRS IN WIRELESS COMMUNICATION SYSTEM**

(57)     A method of performing sidelink positioning in a wireless communication system according to an aspect of the present disclosure may include, as an operation of receiving, by a first UE, allocation information from a base station, receiving, by each of one or more UEs, the allocation information from the base station; transmitting, by the first UE, the received allocation information to a second UE; as an operation of receiving, by the first UE, an SL SRS from the second UE, receiving, by each of the one or more UEs, the SL SRS transmitted from the second UE, and performing measurement based on the received SL SRS; and as an operation of transmitting measurement information acquired based on the measurement to the base station, acquiring, by each of the one or more UEs, measurement information by performing measurement based on the SL SRS and transmitting the same to the base station.

FIG. 11

**Description**

TECHNICAL FIELD

The present disclosure relates to a method and device for performing positioning on basis of a sounding reference signal (SRS) in a wireless communication system.

RELATED ART

Device-to-device (D2D) communication represents that a single user equipment (UE) directly communicates with another UE. Direct communication represents that a single UE communicates with another UE under control of a network or without using another network device through determination of the UE itself.

The D2D communication may be applied to vehicular communication, which is generally referred to as vehicle-to-everything (V2X). V2X communication refers to a communication method that exchanges or shares information such as traffic conditions, through communication with road infrastructure and other vehicles while driving. A V2X-based service may include, for example, an autonomous driving service, a remote vehicle control service, an interactive service such as a game, and a high-capacity neardistance audio/video service such as augmented reality (AR) and virtual reality (VR). Detailed techniques additionally required for Long Term Evolution (LTE) and new radio (NR) system that are radio access technology (RAT) in a 5G system are under discussion based on performance requirements for supporting various V2X-bsed services through the 5G system.

DETAILED DESCRIPTION

TECHNICAL SUBJECT

A technical subject of the present disclosure relates to a method and apparatus for performing sidelink positioning in a wireless communication system.

An additional technical subject of the present disclosure relates to a method and apparatus for providing allocation information based on a device-to-device (D2D) sidelink formation status.

An additional technical subject of the present disclosure relates to a method and apparatus for configuring allocation information for a sounding reference signal (SRS).

An additional technical subject of the present disclosure relates to a method and apparatus for configuring sequence information of allocation information for an SRS.

An additional technical subject of the present disclosure relates to a method and apparatus for configuring resource information of allocation information for an SRS.

Technical subjects achievable from the present disclosure are not limited to the aforementioned technical subjects and still other technical subjects not described herein may be clearly understood by one of ordinary skill in the art to which the disclosure pertains from the following description

TECHNICAL SOLUTION

A method of performing sidelink positioning in a wireless communication system according to an aspect of the present disclosure may include, as an operation of receiving, by a first user equipment (UE), allocation information from a base station, receiving, by each of one or more UEs, the allocation information from the base station and transmitting, by the first UE, the received allocation information to a second UE; as an operation of receiving, by the first UE, sidelink sounding reference signal (SL SRS) from the second UE, receiving, by each of the one or more UEs, the SL SRS transmitted from the second UE and performing measurement based on the received SL SRS; and as an operation of transmitting measurement information acquired based on the measurement to the base station, acquiring, by each of the one or more UEs, measurement information by performing measurement based on the SL SRS and transmitting the same to the base station.

Also, a method of performing sidelink positioning in a wireless communication system according to an aspect of the present disclosure may include receiving, by a first UE, allocation information from a base station; transmitting, by the first UE, the received allocation information to a second UE and each of one or more UEs; receiving, by the first UE, an SL SRS transmitted from the second UE; as an operation of performing, by the first UE, measurement based on the received SL SRS and acquiring measurement information, acquiring, by each of the one or more UEs, measurement information by performing measurement based on the SL SRS; acquiring, by the first UE, the measurement information from the one or more UEs; and transmitting the acquired measurement information to the base station.

Also, a method of performing sidelink positioning in a wireless communication system according to an aspect of the present disclosure may include generating, by a first UE, allocation information; transmitting, by the first UE, the generated allocation information to a second UE and one or more UEs; receiving, by the first UE, an SL SRS transmitted from the second UE; as an operation of performing, by the first UE, measurement based on the received SL SRS and acquiring measurement information, acquiring, by each of the one or more UEs, measurement information by performing measurement based on the SL SRS; and acquiring, by the first UE, the measurement information from the one or more UEs.

EFFECT

According to the present disclosure, it is possible to provide a method and apparatus for performing sidelink positioning in a wireless communication system.
According to the present disclosure, it is possible to provide a method and apparatus for providing allocation information based on a device-to-device (D2D) sidelink formation status.
According to the present disclosure, it is possible to provide a method and apparatus for configuring allocation information for a sounding reference signal (SRS).
According to the present disclosure, it is possible to provide a method and apparatus for configuring sequence information of allocation information for an SRS.
According to the present disclosure, it is possible to provide a method and apparatus for configuring resource information of allocation information for an SRS.
Effects achievable from the present disclosure are not limited to the aforementioned effects and still other effects not described herein may be clearly understood by one of ordinary skill in the art to which the present disclosure pertains from the following description.

BRIEF DESCRIPTION OF DRAWINGS

FIG. 1 illustrates examples of a vehicle-to-everything (V2X) scenario to which the present disclosure may apply.
FIG. 2 illustrates examples of a V2X scenario to which the present disclosure may apply.
FIG. 3 illustrates examples of a V2X scenario to which the present disclosure may apply.
FIG. 4 illustrates examples of a service provided based on a sidelink to which the present disclosure may apply.
FIG. 5 illustrates a new radio (NR) frame structure to which the present disclosure may apply.
FIG. 6 illustrates an NR resource structure to which the present disclosure may apply.
FIG. 7 illustrates an example of a V2X resource pool configuration to which the present disclosure may apply.
FIG. 8 illustrates an example of a V2X resource pool configuration to which the present disclosure may apply.
FIG. 9 illustrates a method of performing positioning based on an observed time difference of arrival (OTDOA) to which the present disclosure may apply.
FIG. 10 illustrates a control plane and user plane configuration diagram for present invention-related to which the present disclosure may apply.
FIG. 11 illustrates a method of performing positioning based on a sidelink sounding reference signal (SL SRS) to which the present disclosure may apply.
FIG. 12 illustrates a method of performing positioning based on an SL SRS based on request information to which the present disclosure may apply.
FIG. 13 illustrates a method of performing positioning based on an SL SRS to which the present disclosure may apply.
FIG. 14 illustrates a method of performing positioning based on an SL SRS based on request information to which the present disclosure may apply.
FIG. 15 illustrates a method of performing positioning based on an SL SRS to which the present disclosure may apply.
FIG. 16 illustrates a method of performing positioning based on an SL SRS based on request information to which the present disclosure may apply.
FIG. 17 is a flowchart illustrating a method of performing positioning based on an SL SRS to which the present disclosure may apply.
FIG. 18 is a flowchart illustrating a method of performing positioning based on an SL SRS to which the present disclosure may apply.
FIG. 19 is a flowchart illustrating a method of performing positioning based on an SL SRS to which the present disclosure may apply.
FIG. 20 is a block diagram illustrating a base station device and a terminal device to which the present disclosure may apply.

BEST MODE TO CARRY OUT THE INVENTION

Various examples of the disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

When it is determined that detailed description related to a known configuration or function in describing the examples of the present disclosure, the detailed description is omitted. Also, a part irrelevant to the description of the disclosure is omitted and like reference numerals refer to like elements.

It will be understood that when an element is referred to as being "connected to," "coupled to," or "accessed to" another element, it can be directly connected, coupled, or accessed to the other element or intervening elements may be present. Also, it will be further understood that when an element is described to "comprise/include" or "have" another element, it specifies the presence of still another element, but do not preclude the presence of another element uncles otherwise described.

Further, the terms, such as first, second, and the like, may be used herein to describe elements in the description herein. The terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent that the elements are necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the disclosure.

Herein, elements described in various examples may not be necessarily essential and may be partially selectable. Therefore, an example including a partial set of elements described in an example is also included in the scope of the disclosure. Also, an example that additionally includes another element to elements described in various examples is also included in the scope of the disclosure.

The description described herein is related to a wireless communication network, and an operation performed in the wireless communication network may be performed in a process of controlling a network and transmitting data in a system that controls the wireless communication network (e.g., a base station), or may be performed in a process of transmitting or receiving a signal in a user equipment connected to the wireless communication network.

It is apparent that various operations performed for communication with a terminal in a network including a base station and a plurality of network nodes may be performed by the base station or by other network nodes in addition to the base station. Here, the term 'base station (BS)' may be interchangeably used with other terms, for example, a fixed station, a Node B, eNodeB (eNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes a meaning of transmitting or receiving information or a signal through the corresponding channel. For example, transmitting a control channel indicates transmitting control information or a signal through the control channel. Likewise, transmitting a data channel indicates transmitting data information or a signal through the data channel.

The definitions of abbreviations used herein as below.

D2D: Device to Device (communication)
DCI: Downlink Control Information
V2X: Vehicle to X(everything)
V2V: Vehicle to Vehicle
V2P: Vehicle to Pedestrian
V2I/N: Vehicle to Infrastructure/Network
SL: Sidelink
SCI: Sidelink Control Information
SFCI: Sidelink Feedback Control Information
PSSCH: Physical Sidelink Shared Channel
PSBCH: Physical Sidelink Broadcast Channel
PSCCH: Physical Sidelink Control Channel
PSDCH: Physical Sidelink Discovery Channel
PSFICH: Physical Sidelink Feedback Indication Channel

ProSe: (Device to Device) Proximity Services
SLSS: Sidelink Synchronization Signal
PSSID: Physical Sidelink Synchronization Identity
$n^{SA}_{ID}$ : Sidelink group destination identity
$N^{SL}_{ID}$ : Physical sidelink synchronization identity
SA: Scheduling assignment
TB: Transport Block
TTI: Transmission Time Interval
RB: Resource Block

In the following description, although the term "new radio (NR) system" is used to distinguish a system according to various examples of the present disclosure from the existing system, the scope of the present disclosure is not limited thereto.

For example, a new radio (NR) system supports various subcarrier spacings (SCSs) by considering various scenarios, service requirements, potential system compatibility, and the like. Also, to overcome a poor channel environment, such as high pathloss, phasenoise, and frequency offset, occurring on a high carrier frequency, the NR system may support transmission of a physical signal/channel through a plurality of beams. Through this, the NR system may support applications, for example, enhanced Mobile Broadband (eMBB), massive Machine Type Communications (mMTC)/ultra Machine Type Communications (uMTC), and Ultra Reliable and Low Latency Communications (URLLC). Here, the term "NR system" used herein is used as an example of a wireless communication system, and the term "NR system" itself is not limited to the aforementioned features.

Also, for example, 5-th generation (5G) mobile communication technology may be defined. Here, 5G mobile communication technology may be defined by including the existing Long Term Evolution-Advanced (LTE-A) system as well as the aforementioned NR system. That is, 5G mobile communication technology may operate by considering backward compatibility with a previous system as well as a newly defined NR system.

For example, a sidelink field of 5G may include all of sidelink technology in an LTE system and sidelink technology in an NR system. Here, the sidelink field may be essential to enhance a performance and to integrate new and various services through an ultra high reliability and an ultra low latency.

In the following, for clarity of description, an operation for vehicle-to-everything (V2X) communication and related information will be described based on the NR system. Here, the following features may not be limited to a specific system and may apply alike to other systems that are similarly configured. However, it is provided as an example only and the present disclosure is not limited thereto.

Meanwhile, V2X communication may be communication based on a vehicle. Here, the concept of a vehicle is evolving from a simple transportation device to a new platform. For example, information technology (IT) applies to a vehicle and various V2X services are provided accordingly. Services, such as, for example, prevention of traffic accidents, improvement of traffic environments, automatic driving, and remote driving, are provided. To this end, there is a growing need for developing and applying sidelink related technology.

In detail, with respect to existing communication technology, a communication from an Base Station (BS) to a user equipment (UE) may be a downlink and a communication from the UE to the BS may be an uplink. Here, communication between UEs may be required in addition to the communication between the BS and the UE. Here, the communication from one UE to another UE may be the aforementioned sidelink. For example, with respect to the aforementioned V2X communication, a vehicle-to-vehicle (V2V) communication or communication between a vehicle and another object (e.g., an object, excluding the BS, such as a pedestrian UE, a UE-type roadside unit (RSU), and the like) may be a sidelink. That is, in the case of performing vehicle-based communication, there are some constraints using only communication with the eNodeB alone. Therefore, the aforementioned sidelink technology may be developed and applied.

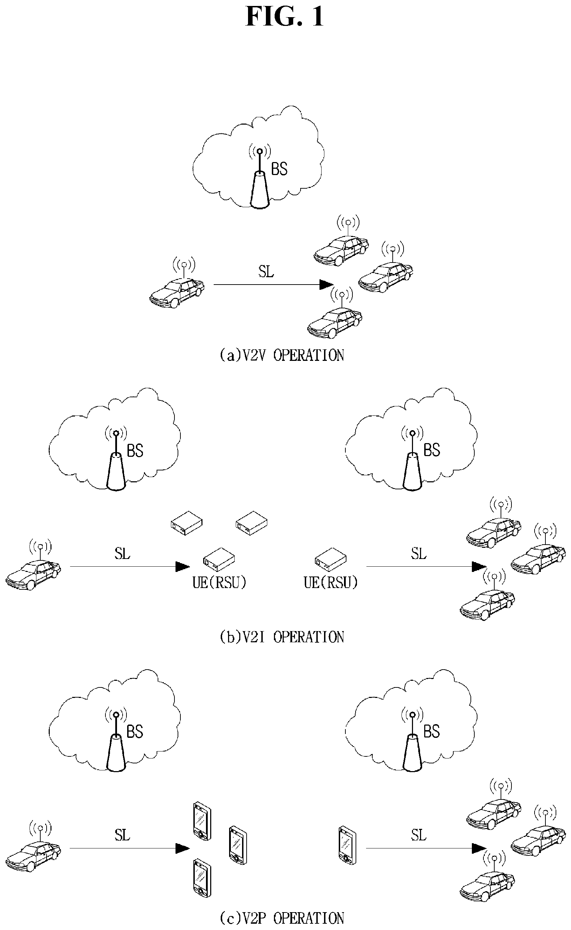

FIGS. 1 to 3 illustrate V2X scenarios which the present disclosure could be applied.

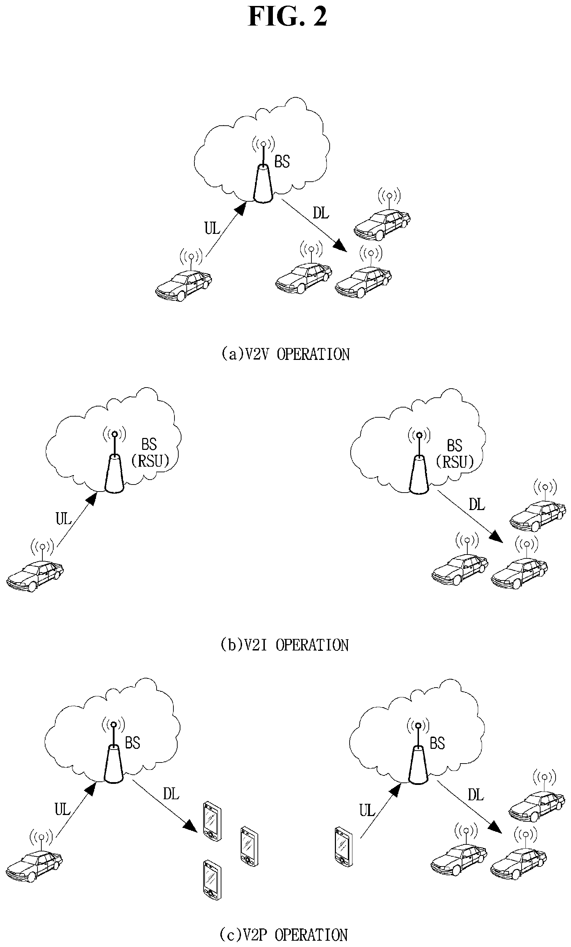

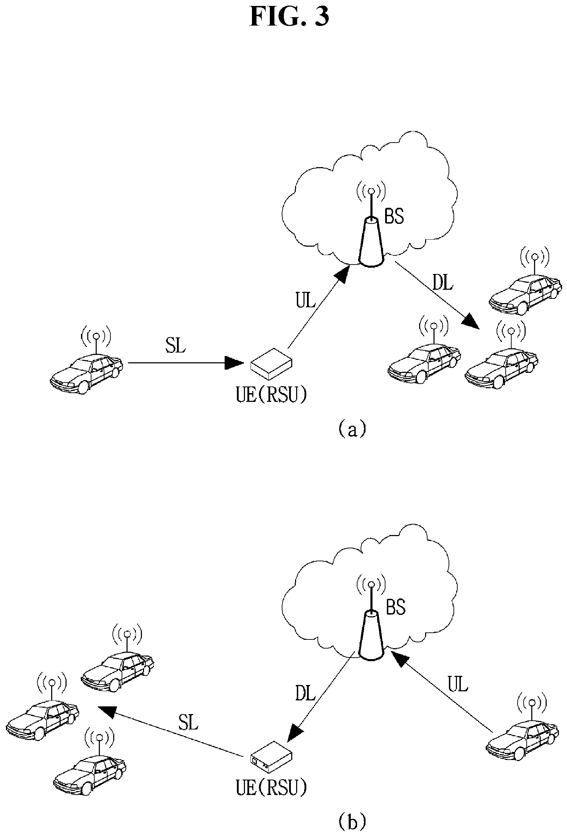

FIG. 1 may be a scenario of performing communication based on the aforementioned sidelink. FIG. 2 may be a scenario of performing a V2X operation using communication between a UE (or a vehicle) and a BS. FIG. 3 may be a scenario of performing communication using all of the aforementioned sidelink and communication with the BS.

For example, in the description related to V2X, the UE may be a vehicle. In the description related to V2X, the UE and the vehicle are collectively referred to as the UE. For example, the UE may refer to a device capable of performing communication with a sidelink and a BS, and may include a vehicle for V2X.

Also, in relation to V2X, D2D (Device to Device) may refer to communication between UEs. Also, the term "proximity-based service (ProSe)" may indicate a proximity service to a UE that performs D2D communication. Also, SL (sidelink) may be the aforementioned sidelink and sidelink control information (SCI) may indicate control information related to the aforementioned sidelink. Also, a Physical Sidelink Shared Channel (PSSCH) may be a channel used to transmit data through a sidelink and a Physical Sidelink Control Channel (PSCCH) may be a channel used to transmit control information through a sidelink. Also, a Physical Sidelink Broadcast Channel (PSBCH) may be a channel used to broadcast a signal through a sidelink and to forward system information. Also, a Physical Sidelink Feedback Indication Channel (PSFICH) may be a channel used for directing feedback information as a sidelink feedback channel. Also, a sidelink synchronization signal (SLSS) may be a synchronization signal for sidelink and physical sidelink synchronization identity (PSSID) may be ID information for sidelink synchronization. Also, $n_{ID}^{SA}$ (Sidelink group destination identity) may be ID information for distinguishing a sidelink group, and $N_{ID}^{SL}$ (Physical sidelink synchronization identity) may be ID information for sidelink synchronization. V2V may mean vehicle-to-vehicle communication, V2P may mean communication between vehicles and pedestrians, and V2I/N may mean communication between vehicles and infrastructure/networks.

The terms SA, TB, TI, and RB may be the same terms used in the existing LTE. for example, in V2X communication, control information transmitted from a UE to another UE may be scheduling assignment (SA). If the aforementioned control information is used for sidelink communication, the control information may be SCI. Herein, the SCI may be transmitted through the PSCCH. Also, a portion of the SCI may be transmitted through the PSCCH and another portion may be transmitted through the PSSCH.

In V2X communication, data transmitted from a UE to another UE may be configured based on a unit of a transport port (TB). Here, the sidelink data may be transmitted through the PSSCH.

Next, herein, an operation mode may be defined based on a resource allocation method for transmitting data and control information for V2X communication or direct link (e.g., D2D, ProSe, or SL) communication.

For example, an eNodeB resource scheduling mode may be a mode in which an eNodeB or a relay node schedules resources used for a UE to transmit V2X (or direct link) control information and/or data. Through this, the UE may transmit the V2X (or direct link) control information and/or data. This mode may refer to the eNodeB resource scheduling mode.

For more detailed example, the eNodeB or the relay node may provide, to a sidelink (or direct link) transmitting UE, scheduling information about resources used to transmit sidelink (or direct ink) control information and/or data through downlink control information (DCI). Therefore, the sidelink (or direct link) transmitting UE may transmit the sidelink (or direct link) control information and data to a sidelink (or direct link) receiving UE, and the sidelink (or direct link) receiving UE may receive sidelink (or direct link) data based on the sidelink (or direct link) control information.

Also, a UE autonomous resource selection mode may be a resource allocation mode in which a UE autonomously selects resources used to transmit control information and data. The resource selection of the UE may be determined through sensing of the UE from a resource pool (i.e., a set of resource candidates). On the selected resource, the UE may transmit V2X (or direct link) control information and/or data.

For more detailed example, the sidelink (or direct link) transmitting UE may transmit sidelink (or direct link) control information and data to the sidelink (or direct link) receiving UE using its selected resource, and the sidelink (or direct link) receiving UE may receive sidelink (or direct link) data based on sidelink (or direct link) control information.

The aforementioned BS resource scheduling mode may be referred to as Mode 1 in sidelink (or direct link) communication for D2D and the like. Also, the BS resource scheduling mode may be referred to as Mode 3 in sidelink communication for V2X and the like. Also, the UE autonomous resource selection mode may be referred to as Mode 2 in sidelink (or direct link) communication for D2D and the like. Also, the UE autonomous resource selection mode may be referred to as Mode 4 in sidelink communication for V2X and the like. However, they are provided as examples only and the present disclosure is not limited thereto. That is, they may be regarded as the same mode with respect to the same target and the same operation.

For example, in NR V2X, BS resource scheduling mode may be referred to as mode 1 (Mode 1) and the UE autonomous resource selection mode may be referred to as mode 2 (Mode 2).

Although the following description is made based on V2X communication for clarity of description, it is not limited thereto. For example, the present disclosure may apply alike to communication based on a direct link such as D2D, ProSe, and the like.

Also, for example, V2X may be a general term for V2V, V2P, and V2I/N. Here, each of V2V, V2P, and V2I/N may be defined as the following Table 1, however, it is not limited thereto. That is, the following Table 1 is provided as an example only and not limited thereto.

[Table 1]

| V2V | - LTE or NR based communication between a vehicle and another vehicle |
|---|---|
| V2P | - LTE or NR based communication between a vehicle and a device carried by an individual (e.g., a terminal carried by a pedestrian, a cyclist, a driver, or a passenger) |
| V2I/N | - LTE or NR based communication between a vehicle and a roadside unit(RSU)/network |

(continued)

| |
|---|
| - The RSU refers to a suspended social infrastructure entity that supports V2X applications and may exchange messages with other independent entities that support V2X applications. |
| - The RSU is a logical independent entity integrated with a V2X application logic having functions of a BS (in this case, referable as a BS-type RSU) or a UE (in this case, referable as a UE-type RSU). |

Also, V2X communication may include PC5 based communication that is an interface for sidelink communication.

For example, the following Table 2 and FIG. 1 may refer to a scenario for supporting a V2X operation based on a PC5 interface (or SL). Here, (a) of FIG. 1 illustrates an example of a V2V operation, (b) of FIG. 1 illustrates an example of a V2I operation, and (c) of FIG. 1 illustrates an example of a V2P operation. That is, FIG. 1 illustrates a method of performing communication based on the sidelink (SL). Here, communication may be performed without a BS.

[Table 2]

| |
|---|
| - Scenario that supports a V2X operation operating based on only PC5 |
| - In this scenario, a UE transmits a V2X message to a plurality of UEs present in a local area through a sidelink. |
| - With respect to V2I, a transmitter UE or receiver UE(s) may be a UE-type roadside unit (RSU). |
| - With respect to V2P, a transmitter UE or receiver UE(s) may be a pedestrian UE. |

Meanwhile, the following Table 3 and FIG. 2 may refer to a scenario for supporting a V2X operation based on a Uu interface (i.e., an interface between a UE and a BS). Here, (a) of FIG. 2 illustrates an example of a V2V operation, (b) of FIG. 2 illustrates an example of a V2I operation, and (c) of FIG. 2 illustrates an example of a V2P operation. That is, the V2X operation may be supported using communication between a UE and a BS.

[Table 3]

| |
|---|
| - Scenario that supports a V2X operation operating based on only Uu interface |
| - In this scenario, |
| With respect to V2V and V2P, a UE transmits a V2X message to a BS through an uplink, and the BS transmits the V2X message to a plurality of UEs present in a local area through a downlink. |
| With respect to V2I, if a receiver is a BS-type RSU, a UE transmits a V2I message to a BS (BS-type RSU) through an uplink; and if a transmitter is a BS-type RSU, the BS (BS-type RSU) transmits the V2I message to a plurality of UEs present in a local area. |
| - With respect to V2P, a transmitter UE or receiver UE(s) may be a pedestrian UE. |
| - To support this scenario, the BS performs uplink reception and downlink transmission of a V2X message and uses a broadcast mechanism with respect to a downlink. |

The following Table 4 and FIG. 3 may refer to a scenario for supporting a V2X operation that uses all of a UE interface and PC5 interface (or SL). Here, (a) of FIG. 3 illustrates Scenario 3A of Table 4 and (b) of FIG. 3 illustrates Scenario 3B of Table 4.

In detail, referring to (a) of FIG. 3, a UE may transmit a V2X message to other UEs through a sidelink. One of the UEs receiving the V2X message may transmit the V2X message to a BS through an uplink (UL). The BS may receive the V2X message and may transmit a message based on the V2X message to other neighboring UEs through a downlink (DL). Here, for example, the downlink transmission may be performed using a broadcast method.

Referring to (b) of FIG. 3, a UE may transmit a V2X message to a BS through an uplink (UL) and the BS may transmit the V2X message to at least one UE or RSU. In response thereto, the UE or the RSU may transmit the received message to a plurality of neighboring UEs through a sidelink (SL).

In (a) and (b) of FIG. 3, the V2X operation may be supported using all of communication between the BS and the UE and the sidelink.

[Table 4]

| |
|---|
| - Scenario in which a UE transmits a V2X message to other UEs through a sidelink |
| - Scenario 3A(Scenario 3A) |

(continued)

> In this scenario, a UE transmits a V2X message to other UEs through a sidelink. One of a plurality of receiver UEs is a UE-type RSU and receives the V2X message through the sidelink and transmits the V2X message to a BS through an uplink. The BS receives the V2X message from the UE-type RSU and transmits the V2X message to a plurality of UEs present in a local area through a downlink.
>
> To support this scenario, the BS performs uplink reception and downlink transmission of the V2X message, and uses a broadcast mechanism with respect to the downlink
>
> - Scenario 3B(Scenario 3B)
>
> In this scenario, a UE transmits a V2X message to a BS through an uplink. The BS transmits the V2X message to at least one UE-type RSU. The UE-type RSU transmits the V2X message to other UEs through a sidelink.
>
> To support this scenario, the BS performs uplink reception and downlink transmission of the V2X message, and uses a broadcast mechanism with respect to the downlink.

As described above, the V2X communication may be performed through the BS and may be performed through direct communication between UEs. Here, if the BS is used, transmission and reception may be performed through a Uu link that is a communication interface between an LTE BS and UE in LTE-based V2X communication. Also, if the sidelink is used for the direct communication between UEs, transmission and reception may be performed through a PC5 link that is a communication interface between LTE UEs in the LTE-based V2X communication.

For example, even in an NR system, the V2X communication may be performed using communication between a UE and a BS and a sidelink between UEs. Here, there may be a difference between a communication (uplink/downlink) method between the BS and the UE in the NR system. For example, the communication methods may be similar in terms of some features and there may be some changes based on the NR system that is a new system. Also, for example, there may be a difference between the sidelink in the NR system and the sidelink in the existing system. That is, there may be some changes in the sidelink based on the NR system that is a new system by considering the aforementioned communication difference between the BS and the UE.

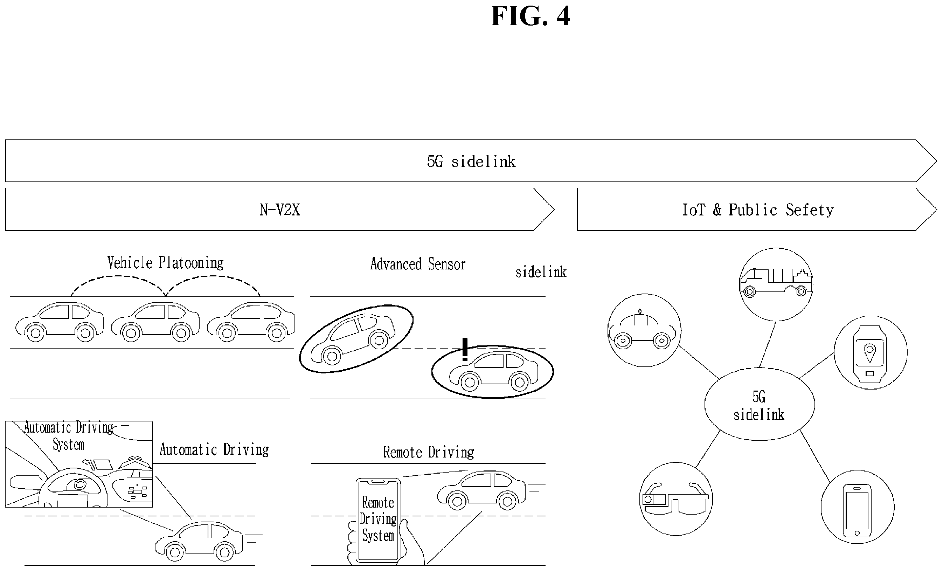

FIG. 4 illustrates an example of a service provided based on a sidelink to which the present disclosure may apply.

Referring to FIG. 4, a V2X related service or an Internet of Things (IoT) service may be provided based on a 5G sidelink. Here, for example, the 5G sidelink may be a concept that includes all of a sidelink based on an existing LTE system and a sidelink based on an NR system. That is, the 5G sidelink may be a service that is provided by considering the sidelink applied in each system.

For example, referring to FIG. 4, with respect to aV2X service, a vehicle platooning, an automatic driving, an advanced sensor, and a remote driving service may be provided. Here, the vehicle platooning may refer to technology that allows a plurality of vehicles to dynamically form a group and operate in a similar manner. Also, the automatic driving may refer to technology that drives a vehicle based on a complete automation and a semi-automation. Also, the advanced sensor may refer to technology that collects and exchanges data acquired from a sensor or a video image. Also, the remote driving may refer to technology for remotely controlling a vehicle and technology for an application. That is, the aforementioned services may be provided as a V2X-based service. Here, the services are provided as examples only and the present disclosure is not limited thereto. Here, requirements, such as ultra latency, ultra connectivity, low power, and high reliability, may be required to provide the V2X service. Therefore, the 5G sidelink may require an operation method for meeting the services and the requirements according thereto. A detailed method considering the requirements is described in the following.

Hereinafter, the physical resource structure of the NR system is described.

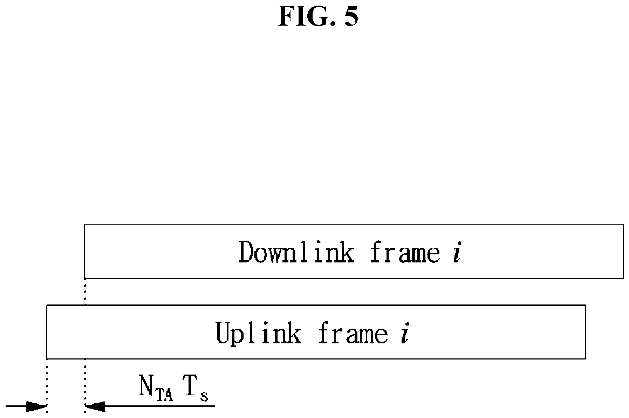

FIG. 5 illustrates examples of a frame structure for the NR system to which the present disclosure may be applied.

$$T_c = \frac{1}{(\Delta f_{max} \cdot N_f)}$$

In NR, a basic unit of a time domain may be $T_c = \frac{1}{(\Delta f_{max} \cdot N_f)}$ . Here, $\Delta f_{max} = 480 \cdot 10^3$ and $N_f = 4096$. In LTE, $T_s = 1/(\Delta f_{ref} \cdot N_{f,ref})$, $\Delta f_{ref} = 15 \cdot 10^3 Hz$, and $N_{f,ref} = 2048$ may be defined as a reference time unit. The constant for the multiples relationship between the NR reference time unit and the LTE reference time unit may be defined as $\kappa = T_s/T_c = 64$.

Referring to FIG. 5, a time structure of a frame for a downlink/uplink (DL/UL) transmission may include $T_f = (\Delta f_{mas} N_f/100) \cdot T_s = 10ms$. Here, a single frame may include 10 subframes corresponding to $T_{sf} = (\Delta f_{mas} N_f/1000) \cdot T_s = 1ms$. A number of consecutive OFDM symbols per subframe may be $N_{symb}^{subframe,\mu} = N_{symb}^{slot} N_{slot}^{subframe,\mu}$ . Also, each frame may be divided in two half frames and the half frames may include 0~4 subframes and 5~9 subframes. Here, half frame 1 may include 0~4 subframes and half frame 2 may include 5~9 subframes.

Referring to FIG. 5, $N_{TA}$ shows a timing advance (TA) between the downlik (DL) and the uplink (UL). Here, a transmission timing of uplink transmission frame i is determined based on a downlink reception time at a UE according to the following Equation 1.

$$[\text{Equation 1}]$$

$$T_{TA} = \left(N_{TA} + N_{TA,offset}\right) \cdot T_C$$

In Equation 1, $N_{TA,offset}$ denotes a TA offset occurring due to a duplex mode difference and the like. Basically, in a frequency division duplex (FDD), $N_{TA,offset}$ = 0. In a time division duplex (TDD), $N_{TA,offset}$ may be defined as a fixed value by considering a margin for a DL-UL switching time.

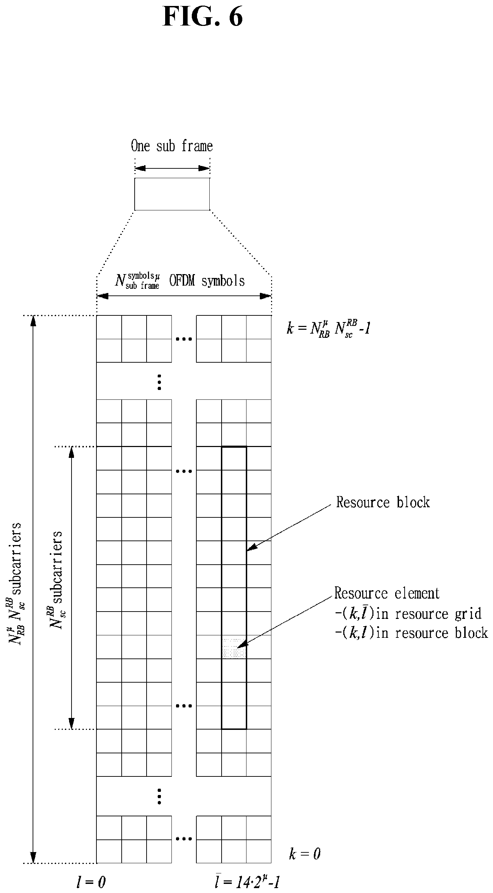

FIG. 6 illustrates an NR resource structure to which the present disclosure may apply.

A resource element within a resource grid may be indexed based on each subcarrier spacing. Here, a single resource grid may be generated for each antenna port and for subcarrier spacing. Uplink/downlink transmission and reception may be performed based on a corresponding resource grid.

A single resource block is configured on a frequency domain using 12 resource elements and configures an index n_PRB for a single resource block every 12 resource elements. An index of the resource block may be used in a specific frequency band or system bandwidth. The index for the resource block may be defined as shown in Equation 2. Herein, $N^{RB}_{sc}$ means the number of subcarriers per resource block and k means the subcarrier index.

$$[\text{Equation 2}]$$

$$n_{PRB} = \left\lfloor \frac{k}{N^{RB}_{sc}} \right\rfloor$$

Numerologies may be variously configured to meet various services and requirements of the NR system. For example, a plurality of subcarrier spacings (SCSs) may be supported, which differs from the existing LTE/LTE-A system that supports a single SCS.

A new numerology for the NR system that includes supporting the plurality of SCSs may operate in the frequency range or carrier, such as 3 GHz or less, 3 GHz~6 GHz, or 6 GHz~52.6 GHz, to solve an issue that a wide bandwidth is unavailable in the existing frequency range or carrier, such as 700 MHz or 2GHz. However, the scope of the present disclosure is not limited thereto.

Table 5 below shows an example of the numerology supported by the NR system.

[Table 5]

| $u$ | $\Delta f = 2^u \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the Table 5, the numerologies may be defined based on an SCS, a cyclic prefix (CP) length, and a number of OFDM symbols per slot, which are used in an OFDM system. The aforementioned values may be provided to a UE through upper layer parameters, DL-BWP-mu and DL-BWP-cp (DL) and UL-BWP-mu and UL-BWP-cp (UL).

For example, referring to the following Table 5, if $\mu$=2 and SCS = 60 kHz, a normal CP and an extended CP may be applied. In other numerology index, only the normal CP may be applied.

A normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for a length of another time section. Here, for coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having a number of symbols less by at least one symbol than that of the normal slot. For example, in the case of providing a low latency such as a Ultra-Reliable and Low Latency Communications (URLLC) service, a latency may decrease through the non-slot having the number of slots less than that of the normal slot. Here, the number of OFDM symbols included in the non-slot may be determined based on a frequency range. For example, a non-slot with 1 OFDM symbol length may be considered in the frequency range of 6 GHz or more. As another example, a number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7 as a non-slot standard, it is provided as an example only.

Also, for example, an SCS corresponding to $\mu$=1 and 2 may be used in the unlicensed band of 6 GHz or less and an SCS corresponding to $\mu$=3 and 4 may be used in the unlicensed band above 6 GHz.

[Table 6]

| u | N$^{slot}_{symb}$ | N$^{frame,u}_{slot}$ | N$^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 6 shows, in the case of normal CP, a number of OFDM symbols per slot ( $N^{symb,\mu}_{slot}$ ), a number of slots per frame ( $N^{frame,\mu}_{slot}$ ), and a number of slots per subframe ( $N^{subframe,\mu}_{slot}$ ) for each SCS setting parmeter $\mu$, as provided by Table 6. Here, in Table 6, the values are based on the normal slot having 14 OFDM symbols.

[Table 7]

| u | N$^{slot}_{symb}$ | N$^{frame,u}_{slot}$ | N$^{subframe,u}_{slot}$ |
|---|---|---|---|
| 2 | 12 | 40 | 4 |

Table 7 shows, in the case the extended CP may be applied ($\mu$ = 2 and SCS = 60 kHz), a number of slots per frame and a number of slots per subframe based on the normal slot of which the number of OFDM symbols per slot ( $N^{symb,\mu}_{slot}$ ) is 12.

Also, as described above, a single subframe may correspond to 1 ms on a time axis. Also, a single slot may correspond to 14 symbols on the time axis. Also, for example, a single slot may correspond to 7 symbols on the time axis. Therefore, a number of slots and a number of symbols available in 10ms corresponding to a single radio frame may be differently set. Table 8 shows a number of slots and a number of symbols according to each SCS. Here, for example, an SCS of 480 kHz may not be considered and the present disclosure is not limited thereto.

[Table 8]

| SCS | Number of Slots within 10ms (14 symbols per slot) | Number of Slots within 10ms (7 symbols per slot) | Number of symbols within 10ms |
|---|---|---|---|
| 15 kHz | 10 | 20 | 140 |
| 30 kHz | 20 | 40 | 280 |
| 60 kHz | 40 | 80 | 560 |

(continued)

| SCS | Number of Slots within 10ms (14 symbols per slot) | Number of Slots within 10ms (7 symbols per slot) | Number of symbols within 10ms |
|---|---|---|---|
| 120 kHz | 80 | N/A | 1120 |
| 240 kHz | 160 | N/A | 2240 |
| 480 kHz | 320 | N/A | 4480 |

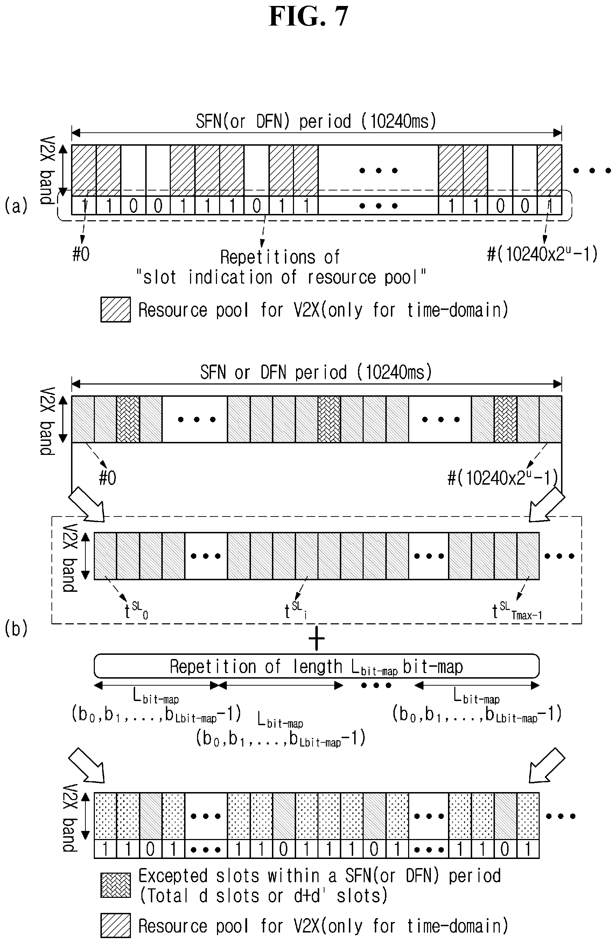

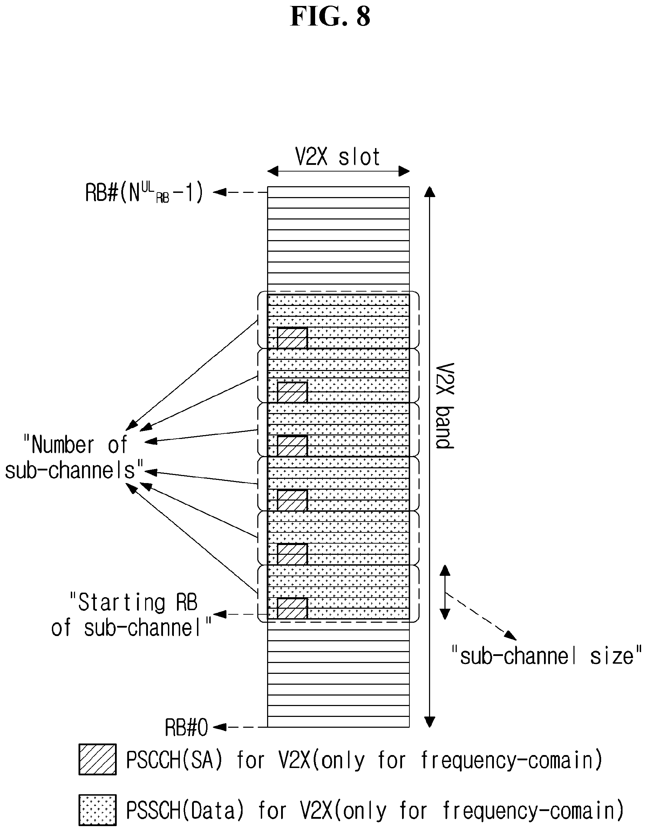

FIGS. 7 and 8 illustrate examples of V2X resource pool configuration to which the present disclosure may apply.

Referring to FIGS. 7 and 8, a method of configuring a resource pool for a control channel (PSCCH) through which scheduling assignment (SA) is transmitted and a data channel (PSSCH) through which data related thereto is transmitted in V2X is described. Here, the resource pool may refer to a set of resource candidates available for transmission of SA and/or data. Each resource pool may be called a slot pool in a time domain and may also be called a resource block pool in a frequency domain. Here, the resource pool as in the examples of FIGS. 7 and 8 may be one for vehicle (V)-UE in V2X. Also, the resource pool configuration method as in the examples of FIGS. 7 and 8 are provided as an example only and the resource pool may be configured using another method.

The resource pool as in the examples of FIGS. 7 and 8 may be defined in a UE autonomous resource selection mode (or mode 2).

In a BS resource scheduling mode (or mode 1), all of sidelink slots (e.g., corresponding to all of uplink slots in NR) in the time domain and resources corresponding to all of resource blocks (RBs) within V2X carrier or band in the frequency domain may be a set of resource candidates available for transmitting SA and/or data. Also, even in the BS resource scheduling mode (or mode 1), a set of resource candidates available for transmitting SA and/or data may be configured by separately defining the resource pool as in the UE autonomous resource selection mode (or mode 2).

That is, the resource pool according to the present disclosure described with reference to FIGS. 7 and 8 may be defined in the UE autonomous resource selection mode (or mode 2) and/or the eNodeB resource scheduling mode (or mode 1).

Hereinafter, the slot pool corresponding to the resource pool in the time domain will be further described.

FIG. 7 illustrates slots in which the resource pool is configured in the time domain, with respect to the resource pool. Referring to FIG. 7, slots for the resource pool for V2X may be defined by indicating a repetition of a bitmap with respect to all of the slots excepting specific slots. The slots for the resource pool for V2X may be slots in which transmission and/or reception of SA and/or data is allowed for the resource pool in V2X.

Here, slots to be excepted from bitmap repetitions may include slots used for transmission of a Sidelink Signal Block (SSB) including a Primary Sidelink Synchronization Signal (PSSS), a Secondary Sidelink Synchronization Signal (SSSS), and a Physical Sidelink Broadcast Channel (PSBCH). Also, the excepted slots may further include downlink (DL) slots or flexible slots, not uplink (UL) slots available as sidelink (SL) slots in TTD. Here, the excepted slots are not limited to the aforementioned example.

For example, excepted slots within a system frame number (SNF) or a D2D frame number (DFN) period may include d non-uplink slots and slots for SSB. Also, the excepted slots may further include d' slots that are additionally excepted such that a bitmap with a length of $L_{bitmap}$ may be repeatedly applied by an integer multiple within the SFN or DFN period. Here, the excepted slots are not limited to the aforementioned example.

Also, the repeatedly applied bitmap may be indicated with upper layer signaling (signaling field "slot indication of resource pool" in FIG. 7) such as RRC and the like. A length of the signaling field may be 16, 20, or 100, but is not limited thereto. If the bitmap value is 1, it may indicate a slot for the resource pool. If the bitmap value is 0, it may indicate a slot that does not belong to the resource pool. Here, a value of u of FIG. 7 may follow a value defined in Table 5 to Table 7 as a value according to a Subcarrier Spacing (SCS).

Next, the resource blook pool corresponding to the resource pool in the frequency domain will be further described.

FIG. 8 illustrates slots in which the resource pool is configured in the frequency domain. Referring to FIG. 8, a PSCCH that transmits SA and a PSSCH that transmits data within the resource pool may be simultaneously transmitted in a single sub-channel. Here, the PSSCH may be transmitted over the entire sub-channel, whereas the PSCCH may be transmitted in a portion of the sub-channel.

Referring to FIG. 8, in a slot in which the resource pool is configured in the time domain for V2X "Starting RB of sub-channels" may be defined based on a single RB unit with respect to all of RBs (RB#0 to $\mathrm{RB\#}\,(N_{RB}^{UL}-1)$) in the frequency domain (here, $N_{RB}^{UL}$ denotes a total number of RBs corresponding to a system bandwidth for uplink (UL) and V2X for a sidelink is defined in a UL band and thus, UL may be replaced with SL (i.e., $N_{RB}^{SL}$ may be applied instead of $N_{RB}^{UL}$). The signaling field "Starting RB of sub-channels" may be indicated through upper layer signaling, such as RRC and the like. Consecutive RBs corresponding to a total number of K sub-channels starting from RB indicated with such "Starting RB of sub-channels" belong to the resource pool. Here, a number of RBs that constitute a single sub-channel may be indicated with a signaling field "Sub-channel size" and the number of K sub-channels may be indicated with a signaling field "Number of sub-channels" through upper layer signaling such as RRC.

For example, "Sub-channel size" $N_{subchannel}$ may be 10, 15, 20, 25, 50, 75, or 100 RBs, but without being limited thereto, 4, 5, or 6 RBs may be used. Also, referring to FIG. 8, the PSCCH for SA allocated to a portion of the sub-channel may be allocated to X RBs within the sub-channel. Here, $X \leq SN_{subchannel}$.

Positioning technology applied below is being further improved using long term evolution (LTE)-based NR wireless technology and, in the case of being applied for commercial purpose, includes technologies for satisfying an error of up to 3 m indoors and an error of up to 10 m outdoors for 80% of users within coverage. To this end, for uplink and/or downlink, the following various technologies are being considered, including arrival time-based technology and departure/arrival angle-based technology.

As a downlink-based method, time-based technology includes a DL-time difference of arrival (TDOA) method and angle-based technology includes a DL-angle of departure (DL-AoD) method. For example, when estimating a location of a UE based on DL-TDOA, a time difference of arrival between signals transmitted from different transmission points may be calculated and the location of the UE may be estimated through a time difference of arrival value and location information of each transmission point. Also, for example, when estimating a location of a UE based on DL-AoD, the location of the UE may be estimated by verifying an angle of departure of a signal transmitted to the UE and by verifying a direction in which the signal is transmitted based on a location of a corresponding transmission point.

Also, as an uplink-based method, time-based technology includes a UL-TDOA method and angle-based technology includes a UL-angle of arrival (AOA) method. For example, when estimating a location of a UE based on UL-TDOA, a time difference for a signal transmitted from the UE to arrive at each transmission point may be calculated and the location of the UE may be estimated through a time difference of arrival value and location information of each transmission point. Also, for example, when estimating a location of a UE based on UL-AoA, the location of the UE may be estimated by verifying an angle of arrival of a signal transmitted from the UE and by verifying a direction in which the signal is transmitted based on a location of a corresponding transmission point.

Also, a downlink and uplink-based method includes a multi-cell Round-Trip Time (RTT) method, an RTT method between one or more adjacent gNodeBs and/or Transmission Reception Points (TRPs) for NR uplink and downlink positioning, and an Enhanced Cell ID (E-CID) method. For example, when estimating a location of a UE based on multi-cell RTT, a time used to transmit a signal and to receive a response in a plurality of cells (i.e., RTT) may be measured and the location of the UE may be estimated through location information of the plurality of cells. Also, the location of the UE may be estimated by verifying an RTT signal in gNodeBs and/or TRPs. Also, when estimating a location of a UE based on E-CID, the location of the UE may be estimated through cell location information by measuring an angle of arrival and reception strength and by verifying each cell ID.

To realize the aforementioned technologies, an LTE downlink-based positioning reference signal (PRS) is being newly discussed as a "DL PRS" modified according to an NR downlink structure. Additionally, for uplink, it is being evolved into an "SRS for positioning" that is a reference signal improved by considering a sounding reference signal (SRS), which is an NR-based uplink reference signal considering MIMO, up to positioning.

Also, to provide an improved solution in association with a positioning operation, additional requirements are being considered with respect to high accuracy, low latency, network efficiency (e.g., scalability, RS overhead, etc.), and UE efficiency (e.g., power consumption, complexity, etc.) for horizontal and vertical positioning.

For example, requirements may be considered such that a positioning operation may have high accuracy considering an industrial Internet of things IoT (IIoT) scenario. To this end, a DL/UL location reference signal, signaling/procedure for accuracy improvement, reduced latency, and a method of improving network efficiency and UE efficiency may be considered.

Therefore, a work of improving performance of NR-based positioning technologies for higher accuracy and lower latency and network/UE efficiency is being applied in commercial use cases, such as IoT devices for smart home or wearable, and IIoT use cases, such as IoT devices in smart factory.

In this regard, the work aims to increase accuracy with an error of up to 1 m for commercial use cases and to increase accuracy with an error of up to 0.2 m for IIoT use cases, and to further reduce a delay time from within the existing 100 ms to within 10 ms.

Here, the IIoT scenario considering devices for smart factory indoors (indoor factory devices) may be as shown in Table 9 below. Also, for example, Table 10 below shows configuration for simulation considering the IIoT scenario. Specifically, in Table 10, a hall size, a base station (BS) location, and a room height may be set in consideration of the IIoT scenario, such as smart factory. Based thereon, a transmission and reception operation of a base station may be verified. However, it is provided as an example only and the present disclosure may not be limited to the aforementioned configuration.

In detail, the IIoT scenario may consider a dense clutter case (dense) and a sparse clutter case in an internal environment. That is, it may be distinguished depending on how many clutters are present in the internal environment. Also, as the IIoT scenario, a case in which an antenna height is higher than the average clutter height and a case in which the antenna height is lower than the average clutter height may be considered. That is, the IIoT scenario may be as shown in Table 9 below, considering the aforementioned cases.

That is, InF-SL represents a scenario considering a case with sparse clutter and in which both transmitting and receiving antennas of a base station have a lower height than the average clutter antenna height in an indoor factory environment, such as a smart factory. Also, InF-DL represents a scenario considering a case with dense clutter and in which both transmitting and receiving antennas of the base station have a lower height than the average clutter antenna height in the indoor factory environment, such as a smart factory.

Meanwhile, InF-SH represents a scenario considering a case with sparse clutter and in which transmitting or receiving antenna of the base station has a higher height than the average clutter antenna height in the indoor factory environment, such as a smart factory. Also, InF-DH represents a scenario considering a case with dense clutter and in which transmitting or receiving antenna of the base station has a higher height than the average clutter antenna height in the indoor factory environment, such as a smart factory.

Additionally, InF-HH represents a scenario considering a case in which both transmitting and receiving antennas of the base station have a higher height than the average clutter antenna height regardless of clutter density, in the indoor factory environment, such as a smart factory.

Here, a clutter refers to a form in which base stations are intensively arranged at regular intervals in a certain space. For example, the clutter may be implemented with 18 base stations as shown in Table 10 in an internal environment, but it is provided as an example only and the present disclosure is not limited thereto.

Also, as described above, considering the clutter density and the antenna height between a base station and a clutter in the scenario is because, as characteristic or interference of radio waves varies accordingly, positioning technology for satisfying various performance requirements (accuracy, latency, network/UE efficiency, etc.) required for positioning may slightly vary.

However, in actual application, common positioning technology capable of covering all requirements in the above five scenarios may be applied. Positioning technology to be described herein below may be applicable to all of the five scenarios. That is, positioning may be performed by applying the following positioning technology to be described herein to all IIoT devices that operate based on NR in an indoor factory environment, such as a smart factory.

[Table 9]

| |
|---|
| - InF-SL : Indoor Factory with Sparse clutter and Low base station height (both Tx and Rx are below the average height of the clutter) |
| - InF-DL : Indoor Factory with Dense clutter and Low base station height (both Tx and Rx are below the average height of the clutter) |
| - InF-SH : Indoor Factory with Sparse clutter and High base station height (Tx or Rx elevated above the clutter) |
| - InF-DH : Indoor Factory with Dense clutter and High base station height (Tx or Rx elevated above the clutter) |
| - InF-HH : Indoor Factory with High Tx and High Rx (both elevated above the clutter) |

[Table 10]

| Layout | Hall size | InF-SH:<br><br>(baseline) 300x150 m<br>(optional) 120x60 m<br><br>InF-DH:<br><br>(baseline) 120x60 m<br>(optional) 300x150 m |
|---|---|---|
| | BS locations | 18 BSs on a square lattice with spacing D, located D/2 from the walls.<br>  - for the small hall (L=120m x W=60m): D=20m<br>  - for the big hall (L=300m x W=150m): D=50m<br><br> |
| | Room height | 10m |

In the following, a method of generating a positioning reference signal (PRS) in consideration of positioning requirements required by considering the aforementioned IIoT scenario and a new application is described.

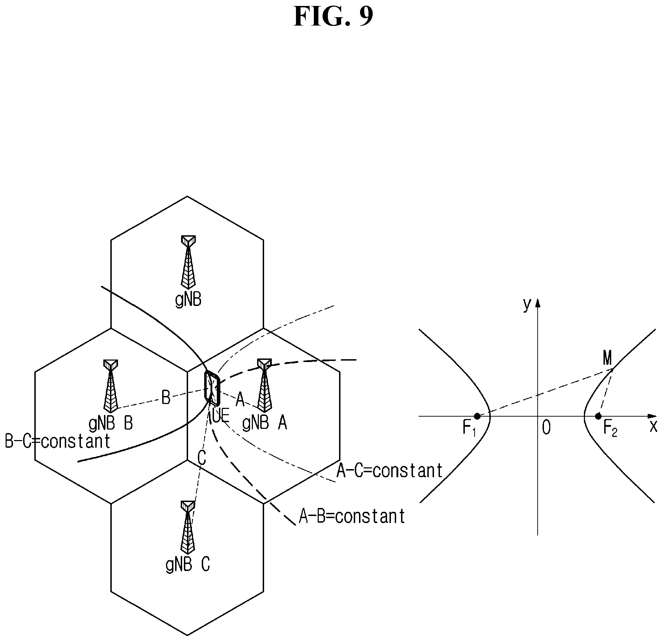

FIG. 9 illustrates a method of performing positioning based on an observed time difference of arrival (OTDOA) to which the present disclosure may apply.

OTDOA may be a method of measuring a location by tracking a signal transmitted to a ground station through a communication satellite in an LTE and/or NR system. That is, OTDOA is based on measuring a time difference of arrival between wireless signals transmitted at various locations. For example, a plurality of cells may transmit a reference signal (RS) and a UE may receive the reference signal. Since a distance between each of the plurality of cells and a location of the UE is different, a time of arrival at which a reference signal transmitted from each of the plurality of cells is received at the UE may be different. Here, the UE may calculate a time difference for a signal received from each cell and may transmit calculated information to a network. The network may combine the time difference with antenna location information of each cell to calculate the location of the UE. Here, at least three cells may be used to measure the location of the UE.

Also, for example, a difference in point in time at which the UE receives a reference signal from each of a pair of base stations (gNodeBs/eNodeBs) is defined as a reference signal time difference (hereinafter, RSTD). Here, location measurement by the RSTD may be performed based on a downlink signal. The UE may estimate a location based on TDOA measurement of special reference signals received from other base stations (gNodeBs/eNodeBs).

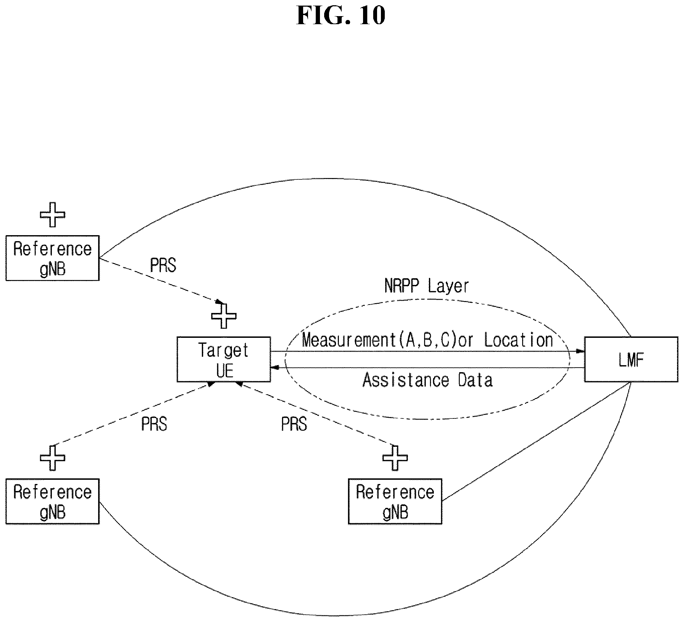

FIG. 10 illustrates a control plane and user plane configuration diagram for present invention-related to which the present disclosure may apply. For example, positioning technology may be defined as at least one of enhanced cell ID (E-CID), observed time difference of arrival (OTDOA) and A-global navigation satellite system (GNSS). Here, the aforementioned positioning technology may simultaneously support positioning solutions of control plane and user plane. LTE and/or NR network-based positioning function may be supervised by a location management function (LMF). Here, control plane positioning and user plane positioning may be performed through the LMF. Here, the LMF may be controlled at a network level and may interwork with a base station through a mobility entity (e.g., access and mobility management function (AMF)).

As another example, the LTE and/or NR network-based positioning function may be controlled under supervision of Evolved-Serving Mobile Location Centre (E-SMLC)/Secure User Plane Location (SUPL) Location Platform (SLP) based on an LTE positioning protocol (LPP). Here, positioning may be performed on the control plane through the E-SMLC and positioning may be performed on the user plane through the SLP and each may be controlled at a network level and may interwork with the base station through a mobility entity (e.g., mobility management entity (MME)).

For example, in the LTE system, positioning may be performed through location estimation based on downlink or positioning may be performed through location estimation based on a cell ID, based on a time difference. In the NR system, positioning may be performed by considering DL-based location estimation (e.g., PRS) and UL-based location estimation (e.g., SRS for positioning). Also, the positioning may be performed through a positioning operation based on a signal exchange time for a plurality of cells as a round trip time (RTT) or through a positioning operation based on a cell ID. Also, the positioning may be performed through a positioning operation based on a time difference between received signals. Also, since a new communication system performs communication based on beams, a positioning operation may be performed based on an angle difference for each beam. Downlink/uplink reference signals and UE/base station operations as described above may be as shown in Table 11 and Table 12 below.

[Table 11]

| DL/UL Reference Signals | UE Measurements | To facilitate support of the following positioning techniques |
|---|---|---|
| Release-16 DL PRS | DL RSTD | DL-TDOA |
| Release-16 DL PRS | DL PRS RSRP | DL-TDOA, DL-AoD, Multi-RTT |
| Release-16 DL PRS / Release-16 SRS for positioning | UE Rx-Tx time difference | Multi-RTT |
| Release-15 SSB / CSI-RS for RRM | SS-RSRP(RSRP for RRM), SS-RSRQ(for RRM), CSI-RSRP (for RRM), CSI-RSRQ(for RRM), SS-RSRPB(for RRM) | E-CID |

[Table 12]

| DL/UL Reference Signals | gNB Measurements | To facilitate support of the following positioning techniques |
|---|---|---|
| Release-16 SRS for positioning | ULRTOA | UL-TDOA |
| Release-16 SRS for positioning | UL SRS-RSRP | UL-TDOA, UL-AoA, Multi-RTT |
| Release-16 SRS for positioning, Release-16 DL PRS | gNB Rx-Tx time difference | Multi-RTT |
| Release-16 SRS for positioning, | AoA and ZoA | UL-AoA, Multi-RTT |

Here, the terms in Table 11 and Table 12 may be as follows.

RSTD (Reference Signal Time Difference)

RSRP (Reference Signal Received Power)

RTOA (Relative Time Of Arrival)

RSRQ (Reference Signal Received Quality)

RSRPB (Reference Signal Received Power per Branch)

RRM (Radio Resource Management)

CSI-RS (Channel State Information Reference Signal)

Here, the RSTD may represent a difference in transmission time between reference signals and the RTOA may represent a relative time value at which a signal arrived. Positioning may be performed based on location information of a transmission point by calculating a relative time difference value based on a location of a transmission point at which a reference signal is transmitted and a transmission time difference. Also, the RSRP represents power of a received reference signal and the RSRPB represents strength of a reference signal measured at each branch. The RSRQ represents quality of a received reference signal. Whether a positioning operation is possible may be verified by verifying the power and the quality of the received reference signal through the RSRP and the RSRQ. Also, the RRM represents performing resource management and verifies resources for positioning.

Also, for example, a sounding reference signal (SRS) for positioning may be configured in an uplink reference signal for positioning. However, it is only a name for clarity of description and the present disclosure is not limited to the aforementioned embodiment. Also, it may be changed to a different name and applied to a newly proposed communication system and may be applied in a form that changes according to a new communication system.

As a specific example, an SRS for a positioning operation may be generated in an NR system. Here, the number of SRS symbols may be 1, 2, or 4 for "SRS for Multi Input Multi Output (MIMO)". Here, in the case of an SRS for positioning, since a larger number of SRSs may be required, the number of SRS symbols may be 1, 2, 4, 8, or 12. Also, a location of an SRS symbol may use up to an N-th symbol (N=0,1... 13) from the very end of a slot. That is, an SRS symbol may be allocated based on the very end of the slot. Also, for example, the number of SRS combs may be 2, 4, or 8, which is described below. Also, for example, offset may be applied to SRS mapping, which may be as shown in Table 13 below.

[Table 13]

| $K_{TC}$ | $k_{offset}^0, ..., k_{offset}^{N_{symb}^{SRS}-1}$ | | | | |
|---|---|---|---|---|---|
| | $N_{symb}^{SRS} = 1$ | $N_{symb}^{SRS} = 2$ | $N_{symb}^{SRS} = 4$ | $N_{symb}^{SRS} = 8$ | $N_{symb}^{SRS} = 12$ |
| 2 | 0 | 0,1 | 0, 1, 0, 1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

An SRS sequence may be a Zadoff-Chu (ZC)-based sequence. For example, the SRS sequence may be generated based on Equation 3 below. Here, n denotes a subcarrier index and *l'* denotes a symbol. Here, $0 \leq n \leq M_{sc,b}^{SRS} - 1$ and $l' \in \{0, 1, ..., N_{symb}^{SRS} - 1\}$. pi denotes an antenna port. For example, since an SRS for positioning uses only a single antenna port, a value of pi may be 1. $\alpha_i$ denotes a cyclic shift (CS) value and $\alpha_i$ may be as shown in Equation 4 and Equation 5 below and, based thereon, the SRS sequence may be generated. Here, in Equation 5, $n_{SRS}^{cs} \in \{0, 1, ..., n_{SRS}^{cs,max} - 1\}$. Here, the SRS sequence may maintain orthogonality by shifting phase based on Equation 4 and 5 below.

[Equation 3]

$$r^{(p_i)}(n, l') = r_{u,v}^{(\alpha_i, \delta)}(n),$$

[Equation 4]

$$a_i = 2\pi \frac{n_{SRS}^{CS,i}}{n_{SRS}^{cs,max}}$$

[Equation 5]

$$n_{SRS}^{cs,i} = \left(n_{SRS}^{cs} + \frac{n_{SRS}^{cs,max}(p_i - 1000)}{N_{ap}^{SRS}}\right) mod\, n_{SRS}^{cs,max}$$

According to the present invention, the number of SRS combs may be various set to 2, 4, or 8. For example, in the case of an LTE system, the number of combs may be 4 and, based thereon, 12 CSs may be used. The number of combs according to the present invention may be set to a different number depending on a system to be applied.

Considering an SRS for positioning in a new communication system according to the present invention, when a comb size is 2, the maximum number of CSs may be 8. Also, when the comb size is 4, the maximum number of CSs may be 12. Also, since the SRS may be used for positioning, a case with comb size = 8 may be considered.

For example, the SRS for positioning may supporting only a single antenna port. The SRS for positioning may not support frequency hopping and frequency axis allocation may support 4 PRBs to 272 PRBs in units of 4 PRBs. Also, in the case of the SRS for positioning, an aperiodic attribute may be supported in the same manner as an aperiodic SRS. Information on the antenna port, frequency hopping, frequency allocation, and period may be indicated through upper layer signaling.

In the case of the SRS for positioning, requirements need to be met in consideration of IIoT scenario or use cases. To this end, a method of increasing orthogonality or reducing overhead may be required.

To this end, the number of symbols of the SRS for positioning may be 1, 2, 4, 8, or 12. Also, the comb size for positioning may be 2, 4, or 8. Here, the SRS may be a sequence based on phase shift as a ZC sequence. Here, CS may represent a value for phase shift and each value phase-shifted based on a CS value may maintain orthogonality.

Also, for example, a UE may configure a parameter for an SRS for positioning based on upper layer signaling. Specifically, the UE may configure the SRS through an SRS resource set for positioning (e.g., "SRS-PosResourceSet-r16") as an upper layer parameter. Here, an SRS resource set parameter for positioning may include an SRS resource set ID parameter for positioning (e.g., srs-PosResourceSetId-r16). Here, the SRS resource set ID parameter (e.g., srs-PosResourceSetId-r16) may include a resource set ID. Also, the SRS resource set parameter for positioning may include an SRS resource list parameter for positioning (e.g., srs-PosResourceIdList-r16). Here, the SRS resource list parameter for positioning may include a list of resource IDs in the SRS resource set. Also, the SRS resource set parameter for positioning may include a resource type parameter (e.g., resourceType-r16). Here, the SRS resource set parameter for positioning may include information regarding whether a resource is aperiodic, semi-persistent, or periodic. Also, the SRS resource set parameter for positioning may include a pathloss-related parameter for positioning (e.g., pathlossReferenceRS-Pos-r16). Here, the pathloss-related parameter for positioning may include information on a reference signal that is referenced in relation to pathloss. For example, the reference signal to be referenced may be at least one of an SSB of a serving cell, an SSB of a neighboring cell, and a DL PRS and information thereon may be included in the pathloss-related parameter for positioning.

Also, the UE may configure an SRS resource based on the SRS resource parameter for positioning (e.g., SRS-PosResource-r16) as the upper layer parameter. Here, the SRS resource parameter for positioning may include an SRS resource ID parameter for positioning (e.g., srs-PosResourceId-r16). Here, the SRS resource ID parameter for positioning may include an SRS resource set. Also, the SRS resource parameter for positioning may include a transmission comb parameter (e.g., transmissionComb-r16). Here, the transmission comb parameter may include information related to a comb to be transmitted. For example, the comb size may be one of 2, 4, and 8. Also, as a specific example, the transmission comb parameter may indicate comb offset (combOffset) and cyclic prefix (cyclicPrefix) values when the comb size is 2. Also, for example, the transmission comb parameter may indicate comb offset (combOffset) and cyclic prefix (cyclicPrefix) values when the comb size is 4. Also, for example, the transmission comb parameter may indicate comb offset (combOffset) and cyclic prefix (cyclicPrefix) values when the comb size is 8.

Also, the SRS resource parameter for positioning may include a resource mapping parameter (e.g., resourceMapping-r16). Here, the resource mapping parameter may indicate an SRS transmission start symbol in a slot. Here, a transmission start symbol may be 0 to 13. Also, the resource mapping parameter may indicate the number of symbols. For example, the number of symbols may be one of 1, 2, 4, 8, and 12.

The SRS resource parameter for positioning may include a frequency domain shift parameter (e.g., freqDomainShift-r16). Here, the frequency domain shift parameter may be information related to a start resource block (RB) in a frequency domain. For example, RB may be 0 to 268.

Also, the SRS resource parameter for positioning may include a group or sequence hopping parameter (e.g., groupOrSequenceHopping-r16). Here, the group or sequence hopping parameter may include information regarding whether to perform group hopping, whether to perform sequence hopping, whether to perform both hopping, or whether to perform neither hopping with respect to the SRS sequence.

Also, the SRS resource parameter for positioning may include a resource type parameter (e.g., resourceType-r16). Here, the resource type parameter may include information regarding whether a resource is aperiodic, semi-persistent, or periodic. For example, when the resource is aperiodic, the resource type parameter may include slot offset information. As another example, when the resource is semi-periodic or periodic, the resource type parameter may include period and offset information.

Also, the SRS resource parameter for positioning may include a sequence ID parameter (e.g., sequenceId-r16). Here, the sequence ID parameter may include SRS sequence ID information.

Also, the SRS resource parameter for positioning may include an SRS spatial relation parameter (e.g., SRS-SpatialRelationInfoPos-r16). Here, the SRS spatial relation parameter may include information on a reference signal to be reference in relation to a spatial relation. For example, the reference signal to be referenced may be at least one of an SSB of a serving cell, an SSB of a neighboring cell, and a DL PRS. Also, when the SSB is the reference signal to be referenced, the SRS spatial relation parameter may further include cell ID and SSB index information.

For example, in a new communication system (e.g., NR), a method and apparatus for performing positioning using a sidelink may be provided. For example, a UE that performs sidelink communication may perform the sidelink communication based on at least one of in-coverage, out-of-coverage, and partial coverage. Also, for example, as described above, the sidelink communication may support vehicle to everything (V2X), public safety, commercial services, and industrial Internet of things (IIoT).

Also, for example, positioning may be performed based on sidelink. Here, positioning may be performed based on at least one of time difference of arrival (TDOA), round trip time (RTT), angle of arrival (AOA), angle of departure (AOD), and reference signal time difference (RSTD), but may not be limited thereto. As another example, measurement for sidelink positioning may be used through combination with another measurement for RAT-based positioning (e.g., Uu based measurement), but is not limited to a specific embodiment.

Also, for example, in the case of performing sidelink positioning based on a new system, a signal design, a resource allocation, measurement, a related procedure, and other matters need to be determined from the physical layer perspective for a reference signal for sidelink positioning, which will be further described below. Also, for example, a method of recycling the existing reference signal or procedure related thereto for sidelink positioning may be performed, which is described below. In the following, a method of performing sidelink-based positioning based on the aforementioned description is described.

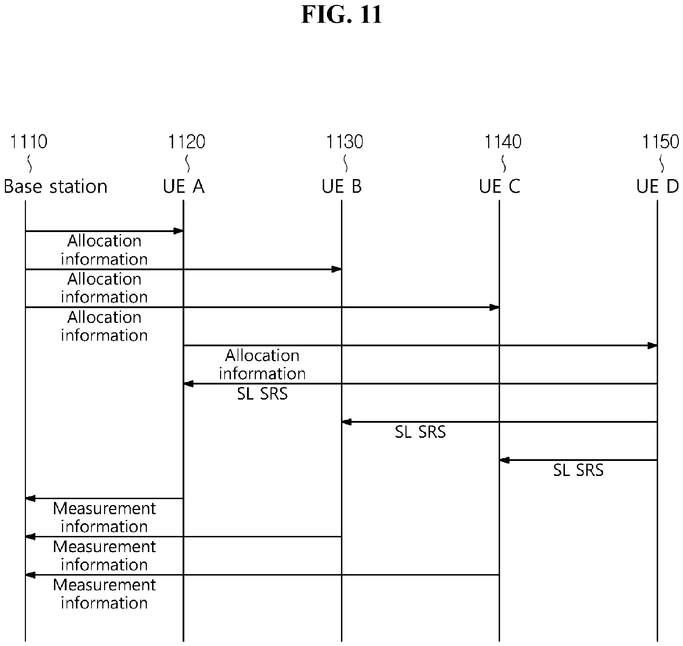

FIG. 11 illustrates a method of performing sidelink-based positioning, applicable to the present disclosure.

Referring to FIG. 11, sidelink-based positioning may be performed. As a specific example, in FIG. 11, a UE A 1120, a UE B 1130, and a UE C 1140 may be present within coverage of a base station 1110. For example, each of the UE A 1120, the UE B 1130, and the UE C 1140 may be in an RRC-connected state with the base station 1110, but the present disclosure may not be limited thereto. Here, a location of a UE D 1150 may be measured based on sidelink-based positioning.

Here, for example, sidelink communication may be possible between the UE A 1120 and the UE D 1150. As another example, the UE A 1120, the UE B 1130, the UE C 1140, and the UE D 1150 may perform group communication-based sidelink communication based on groupcast. For example, the UE A 1120 may be a master terminal in group communication, but the present disclosure is not limited to the aforementioned embodiment.

Also, for example, the following description is made based on the aforementioned situation for clarity, but may not be limited thereto. Referring to FIG. 11, the base station 1110 may transmit allocation information to each of the UE A 1120, the UE B 1130, and the UE C 1140. Here, the allocation information may be information necessary for the UE D 1150 requiring location measurement to transmit a sidelink sounding reference signal (SL SRS). For example, the allocation information may include at least one of resource information and sequence information required for the UE D 1150 to transmit the SL SRS and may further include other information.

Here, for example, the allocation information may be transmitted from the base station 1110 to each of the UE A 1120, the UE B 1130, and the UE C 1140 through upper layer signaling (e.g., RRC). Here, for example, the allocation information may be allocated by a location server and allocated information may be transmitted to each of the UEs through the base station 1110, which may not be limited to a specific embodiment.

Then, UE A 1120 may transmit the allocation information to the UE D 1150. Here, the allocation information may be information required for the UE D 1150 to transmit the SL SRS. Here, for example, each of the UE A 1120, the UE B 1130, and the UE C 1140 may receive the SL SRS transmitted from the UE D 1150. Here, for example, the UE A 1120 may transmit the allocation information to the UE D 1150 through at least one of a physical sidelink control channel (PSCCH) and a physical sidelink shared channel (PSSCH), which is not limited to a specific embodiment. Then, the UE D 1150 may transmit the SL SRS, and each of the UE A 1120, the UE B 1130, and the UE C 1140 may receive the SL SRS transmitted from the UE D 1150.

Then, each of the UE A 1120, the UE B 1130, and the UE C 1140 may perform measurement based on the SL SRS and may acquire measurement information. Then, each of the UE A 1120, the UE B 1130, and the UE C 1140 may transmit the measurement information to the base station 1110. Here, the measurement information may be at least one of time difference of arrival (TDOA) and reference signal time difference (RSTD) as a value that is measured by each UE based on the SL SRS, but may not be limited thereto. For example, each of the UE A 1120, the UE B 1130, and the UE C 1140 may transmit a measurement value to the base station 1110. Then, the base station 1110 may acquire a location value of the UE D 1150 based on the measurement value received from each of the UEs. As another example, the measurement information may be a location value of the UE D 1150 that is calculated based on the SL SRS transmitted from the UE D 1150. That is, the measurement information may be the measurement value itself or may be the location value of the UE D 1150 derived based on the measurement value, which may not be limited to a specific form. Also, for example, the base station 1110 may further transmit the measurement information to the location server. However, the present disclosure may not be limited thereto. In the aforementioned manner, positioning may be performed.

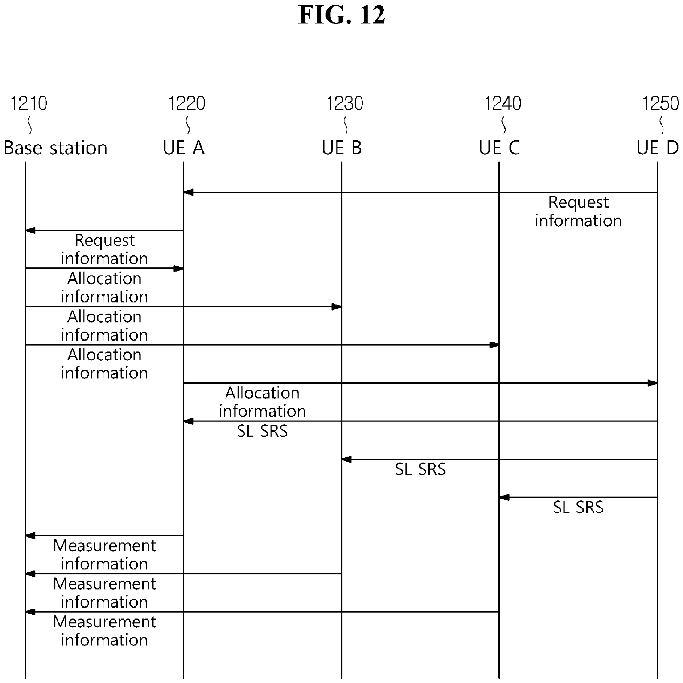

FIG. 12 illustrates a method of performing sidelink-based positioning, applicable to the present disclosure.

Referring to FIG. 12, sidelink-based positioning may be performed. As a specific example, in FIG. 12, a UE A 1220, a UE B 1230, and a UE C 1240 may be present within coverage of a base station 1210. For example, each of the UE A 1220, the UE B 1230, and the UE C 1240 may be in an RRC-connected state with the base station 1210, but the present disclosure may not be limited thereto. Here, a location of a UE D 1250 may be measured based on sidelink-based positioning.

Here, for example, sidelink communication may be possible between the UE A 1220 and the UE D 1250. As another example, the UE A 1220, the UE B 1230, the UE C 1240, and the UE D 1250 may perform group communication-based sidelink communication based on groupcast. For example, the UE A 1220 may be a master terminal in group communication, but the present disclosure is not limited to the aforementioned embodiment.

Also, for example, the following description is made based on the aforementioned situation for clarity, but may not be limited thereto. Referring to FIG. 12, the UE D 1250 may transmit request information to the UE A 1220. Here, the request information may be information requesting location measurement of the UE D 1250. Then, the UE A 1220 may transmit the request information to the base station 1210 based on the request information acquired from the UE D 1250. Here, for example, the base station 1210 may deliver the received request information to a location server, but the present disclosure is not limited to the aforementioned embodiment.

Then, the base station 1210 may transmit allocation information on an SL SRS to each of the UEs based on the request information. As another example, the base station 1210 may receive allocation information on the SL SRS from the location server based on the request information and, based thereon, may transmit the allocation information. The present disclosure is not limited to the aforementioned embodiment.

Then, the base station 1210 may transmit the allocation information to each of the UE A 1220, the UE B 1230, and the UE C 1240. Here, the allocation information may be information necessary for the UE D 1250 requiring location measurement to transmit an SL SRS. For example, the allocation information may include at least one of resource information and sequence information required for the UE D 1250 to transmit the SL SRS and may further include other information.

Here, for example, the allocation information may be transmitted from the base station 1210 to each of the UE A 1220, the UE B 1230, and the UE C 1240 through upper layer signaling (e.g., RRC). Here, for example, the allocation information may be allocated by the location server and allocated information may be transmitted to each of the UEs through the base station 1210, which may not be limited to a specific embodiment.

Then, the UE A 1220 may transmit the allocation information to the UE D 1250. Here, the allocation information may be information required for the UE D 1250 to transmit the SL SRS. Here, for example, each of the UE A 1220, the UE B 1230, and the UE C 1240 may receive the SL SRS transmitted from the UE D 1250. Here, for example, the UE A 1220 may transmit the allocation information to the UE D 1250 through at least one of a PSCCH and a PSSCH, which is not limited to a specific embodiment. Then, the UE D 1250 may transmit the SL SRS, and each of the UE A 1220, the UE B 1230, and the UE C 1240 may receive the SL SRS transmitted from the UE D 1250.

Then, each of the UE A 1220, the UE B 1230, and the UE C 1240 may perform measurement based on the SL SRS and may acquire measurement information. Then, each of the UE A 1220, the UE B 1230, and the UE C 1240 may transmit the measurement information to the base station 1210. Here, the measurement information may be at least one of TDOA and RSTD as a value that is measured by each UE based on the SL SRS, but may not be limited thereto. For example, each of the UE A 1220, the UE B 1230, and the UE C 1240 may transmit a measurement value to the base station 1210. Then, the base station 1210 may acquire a location value of the UE D 1250 based on the measurement value received from each of the UEs. As another example, the measurement information may be a location value of the UE D 1250 that is calculated based on the SL SRS transmitted from the UE D 1250. That is, the measurement information may be the measurement value itself or may be the location value of the UE D 1250 derived based on the measurement value, which may not be limited to a specific form. Also, for example, the base station 1210 may further transmit the measurement information to the location server. However, the present disclosure may not be limited thereto. In the aforementioned manner, positioning may be performed.

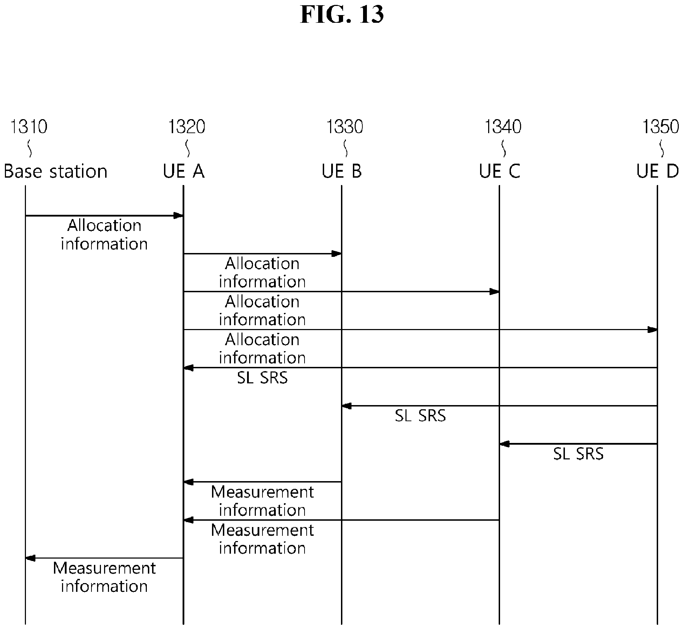

FIG. 13 illustrates a method of performing sidelink-based positioning, applicable to the present disclosure.

Referring to FIG. 13, sidelink-based positioning may be performed. As a specific example, in FIG. 13, a UE A 1320 may be present within coverage of a base station 1310. For example, the UE A 1320may be in an RRC-connected state with the base station 1310, but the present disclosure may not be limited thereto. Here, a location of a UE D 1350 may be measured based on sidelink-based positioning.

Here, for example, sidelink communication may be possible between the UE A 1320 and a UE B 1330, sidelink communication may be possible between the UE A 1320 and a UE C 1340, and sidelink communication may be possible between the UE A 1320 and the UE D 1350. As another example, the UE A 1320, the UE B 1330, the UE C 1340, and the UE D 1350 may perform group communication-based sidelink communication based on groupcast. For example, the UE A 1320 may be a master terminal in group communication, but the present disclosure is not limited to the aforementioned embodiment.

Also, for example, the following description is made based on the aforementioned situation for clarity, but may not be limited thereto. Referring to FIG. 13, the base station 1310 may transmit allocation information to the UE A 1320. Here, the allocation information may be information necessary for the UE D 1350 requiring location measurement to transmit an SL SRS. For example, the allocation information may include at least one of resource information and sequence information required for the UE D 1350 to transmit the SL SRS and may further include other information.

Here, for example, the allocation information may be transmitted from the base station 1310 to the UE A 1320 through upper layer signaling (e.g., RRC). Here, since the UE A 1320 is present within coverage of the base station 1310 and in an RRC connected state, the UE A 1320 may receive the allocation information from the base station 1310. Also, for example, the allocation information may be allocated by a location server and allocated information may be transmitted to each of the UEs through the base station 1310, which may not be limited to a specific embodiment.

Then, the UE A 1320 may transmit the allocation information to each of the UE B 1330 and the UE C 1340. Here, the allocation information may be information necessary for the UE D 1350 requiring location measurement to transmit the SL SRS. For example, the allocation information may include at least one of resource information and sequence information required for the UE D 1350 to transmit the SL SRS and may further include other information. That is, each of the UE B 1330 and the UE C 1340 may receive the aforementioned allocation information from the UE A 1350 to receive the SL SRS from the UE D 1350. Here, for example, the UE A 1320 may transmit the allocation information to each of the UE B 1330 and the UE C 1340 through at least one of a PSCCH and a PSSCH. Also, the UE A 1330 may transmit the allocation information to the UE D 1350. That is, the UE A 1330 may deliver the allocation information as information required for the UE D 1350 to transmit the SL SRS. Here, for example, the UE A 1320 may transmit the allocation information to the UE D 1350 through at least one of the PSCCH and the PSSCH, which is not limited to a specific embodiment. As described above, the UE D 1350 may transmit the SL SRS, and each of the UE A 1320, the UE B 1330, and the UE C 1340 may receive the SL SRS transmitted from the UE D 1350.

Then, each of the UE A 1320, the UE B 1330, and the UE C 1340 may perform measurement based on the SL SRS and may acquire measurement information. Here, each of the UE B 1330 and the UE C 1340 may transmit the measurement information to the UE A 1320. Here, the measurement information may be at least one of TDOA and RSTD as a value that is measured by each UE based on the SL SRS, but may not be limited thereto. For example, the measurement information may be a measurement value itself or may be a location value of the UE D 1350 derived based on the measurement value, which may not be limited to a specific form. In more detail, the UE A 1320 may acquire the measurement value that is measured based on the SL SRS from each of the UE B 1330 and the UE C 1340 as the measurement information. Here, the UE A 1320 may acquire the location value of the UE D 1350 based on measurement values acquired from the UE B 1330 and the UE C 1340. Here, the UE A 1330 may transmit the location value of the UE D 1350 to the base station 1310 as the measurement information. Here, the base station 1310 may report the measurement information to the location server as the location value of the UE D 1350, which may not be limited to a specific embodiment.

As another example, the UE A 1320 may acquire measurement values measured based on the SL SRS from the UE B 1330 and the UE C 1340, as measurement information. Here, the UE A 1320 may transmit, to the base station 1310, a measurement value measured based on the SL SRS by the UE A 1320 with the measurement values acquired from the UE B 1330 and the UE C 1340. Here, the base station 1310 may acquire a location value of the UE D 1350 based on the measurement values of the UE A 1320, the UE B 1330, and the UE C 1340. For example, the base station 1310 may report the measurement information to the location server as the location value of the UE D 1350, which may not be limited to a specific embodiment.

As another example, the UE A 1320 may acquire the location value of the UE D 1350 derived from the measurement values measured based on the SL SRS from the UE B 1330 and the UE C 1340, as the measurement information, and may also transmit the same to the base station 1310. For example, the base station 1310 may report the measurement information to the location server as the location value of the UE D 1350, which may not be limited to a specific embodiment. In the aforementioned manner, positioning may be performed.

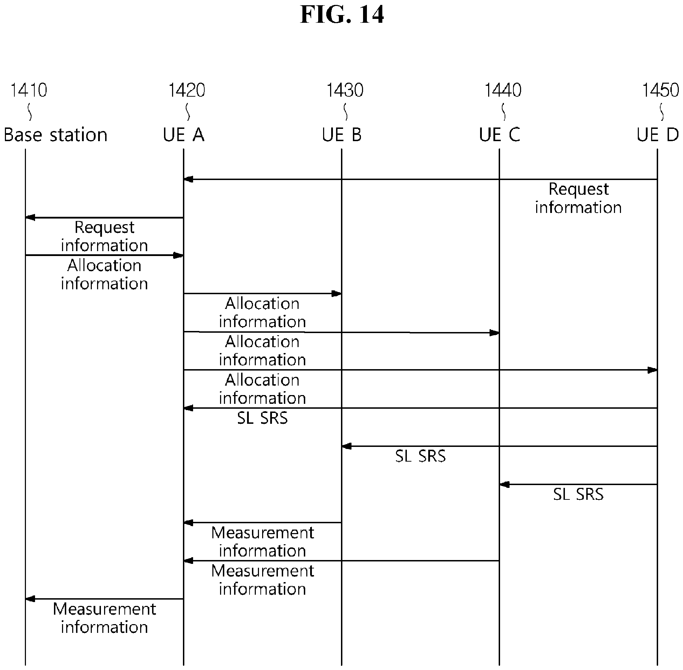

FIG. 14 illustrates a method of performing sidelink-based positioning, applicable to the present disclosure.

Referring to FIG. 14, sidelink-based positioning may be performed. As a specific example, in FIG. 14, a UE A 1420 may be present within coverage of a base station 1410. For example, the UE A 1420 may be in an RRC-connected state with the base station 1410, but the present disclosure may not be limited thereto. Here a location of a UE D 1450 may be measured based on sidelink-based positioning.

Here, for example, sidelink communication may be possible between the UE A 1420 and a UE B 1430, sidelink communication may be possible between the UE A 1420 and a UE C 1440, and sidelink communication may be possible between the UE A 1420 and the UE D 1450. As another example, the UE A 1420, the UE B 1430, the UE C 1440, and the UE D 1450 may perform group communication-based sidelink communication based on groupcast. For example, the UE A 1420 may be a master terminal in group communication, but is not limited to the aforementioned embodiment.

Also, for example, the following description is made based on the aforementioned situation for clarity, but may not be limited thereto. Referring to FIG. 14, the UE D 1450 may transmit request information to the UE A 1420. Here, the request information may be information requesting location measurement of the UE D 1450. Then, the UE A 1420 may transmit the request information to the base station 1410 based on the request information acquired from the UE D 1420. Here, for example, the base station 1410 may deliver the received request information to a location server, but the present disclosure is not limited to the aforementioned embodiment.

Then, the base station 1410 may transmit allocation information on an SL SRS to each of the UEs based on the request information. As another example, the base station 1410 may receive the allocation information on the SL SRS from the location server based on the request information and, based thereon, may transmit the allocation information, but the present disclosure may not be limited to the aforementioned embodiment.

Referring to FIG. 14, the base station 1410 may transmit the allocation information to the UE A 1420. Here, the allocation information may be information necessary for the UE D 1450 requiring location measurement to transmit the SL SRS. For example, the allocation information may include at least one of resource information and sequence information required for the UE D 1450 to transmit the SL SRS and may further include other information.

Here, for example, the allocation information may be transmitted from the base station 1410 to the UE A 1420 through upper layer signaling (e.g., RRC). Here, since the UE A 1420 is present within coverage of the base station 1410 and in an RRC connected state, the UE A 1420 may receive the allocation information from the base station 1410. Here, for example, the allocation information may be allocated by the location server and allocated information may be transmitted to each of the UEs through the base station 1410, which may not be limited to a specific embodiment.

Then, the UE A 1420 may transmit the allocation information to each of the UE B 1430 and the UE C 1440. Here, the allocation information may be information necessary for the UE D 1450 requiring location measurement to transmit the SL SRS. For example, the allocation information may include at least one of resource information and sequence information required for the UE D 1450 to transmit the SL SRS and may further include other information. That is, each of the UE B 1430 and the UE C 1440 may receive the aforementioned allocation information from the UE A 1450 to receive the SL SRS from the UE D 1450. Here, for example, the UE A 1420 may transmit the allocation information to each of the UE B 1430 and the UE C 1440 through at least one of a PSCCH and a PSSCH, which is not limited to a specific embodiment. Also, the UE A 1430 may transmit the allocation information to the UE D 1450. That is, the UE A 1430 may deliver the allocation information as information required for the UE D 1450 to transmit the SL SRS. Here, for example, the UE A 1420 may transmit the allocation information to the UE D 1450 through at least one of the PSCCH and the PSSCH, which is not limited to a specific embodiment. As described above, the UE D 1450 may transmit the SL SRS, and each of the UE A 1420, the UE B 1430, and the UE C 1440 may receive the SL SRS transmitted from the UE D 1450.

Then, each of the UE A 1420, the UE B 1430, and the UE C 1440 may perform measurement based on the SL SRS and may acquire measurement information. Here, each of the UE B 1430 and the UE C 1440 may transmit the measurement information to the UE A 1420. Here, the measurement information may be at least one of TDOA and RSTD as a value that is measured by each UE based on the SL SRS, but may not be limited thereto. For example, the measurement information may be the measurement value itself or may be a location value of the UE D 1450 derived based on the measurement value, which may not be limited to a specific form. In more detail, the UE A 1420 may acquire measurement values measured based on the SL SRS from the UE B 1430 and the UE C 1440 as the measurement information. Here, the UE A 1420 may acquire the location value of the UE D 1450 based on the measurement values acquired from the UE B 1430 and the UE C 1440. Here, the UE A 1430 may transmit the location value of the UE D 1450 to the base station 1410 as the measurement information. Here, the base station 1410 may report the measurement information to the location server as the location value of the UE D 1450, which may not be limited to a specific embodiment.

As another example, the UE A 1420 may acquire measurement values measured based on the SL SRS from the UE B 1430 and the UE C 1440 as measurement information. Here, the UE A 1420 may transmit, to the base station 1410, a measurement value measured based on the SL SRS by the UE A 1420 with the measurement values acquired from the UE B 1430 and the UE C 1440. Here, the base station 1410 may acquire a location value of the UE D 1450 based on the measurement values of the UE A 1420, the UE B 1430, and the UE C 1440. For example, the base station 1410 may report the measurement information to the location server as the location value of the UE D 1450, which may not be limited to a specific embodiment.

As another example, the UE A 1420 may acquire the location value of the UE D 1450 derived from the measurement values measured based on the SL SRS from the UE B 1430 and the UE C 1440, as the measurement information, and may also transmit the same to the base station 1410. For example, the base station 1410 may report the measurement information to the location server as the location value of the UE D 1450, which may not be limited to a specific embodiment. In the aforementioned manner, positioning may be performed.

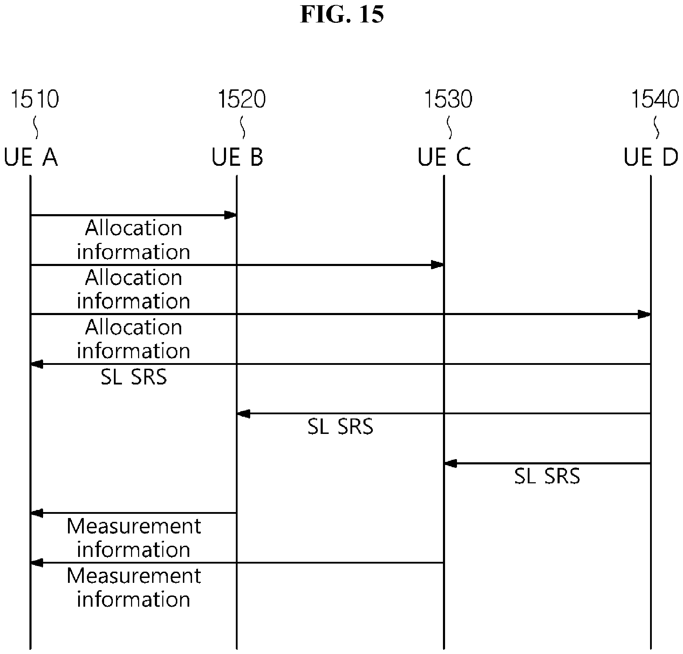

FIG. 15 illustrates a method of performing sidelink-based positioning, applicable to the present disclosure.

Referring to FIG. 15, sidelink-based positioning may be performed. As a specific example, in FIG. 15, positioning may be performed based on sidelink communication between UEs without base station control. For example, a location of a UE D 1540 may be measured based on sidelink-based positioning. Here, for example, sidelink communication may be possible between a UE A 1510 and a UE B 1520, sidelink communication may be possible between the UE A 1510 and a UE C 1530, and sidelink communication may be possible between the UE A 1510 and the UE D 1540. As another example, the UE A 1510 may perform group communication-based sidelink communication based on groupcast. For example, the UE A 1510 may be a master terminal in group communication, but is not limited to the aforementioned embodiment. Also, for example, the following description is made based on the aforementioned situation for clarity, but may not be limited thereto. Referring to FIG. 15, the UE A 1510 may generate allocation information. Here, the allocation information may be information necessary for the UE D 1540 requiring location measurement to transmit an SL SRS. For example, the allocation information may include at least one of resource information and sequence information required for the UE D 1540 to transmit the SL SRS and may further include other information.

Here, for example, the UE A 1510 may transmit the allocation information to each of the UE B 1520 and the UE C 1530. Here, the allocation information may be information necessary for the UE D 1540 requiring location measurement to transmit the SL SRS. For example, the allocation information may include at least one of resource information and sequence information required for the UE D 1540 to transmit the SL SRS and may further include other information. That is, each of the UE B 1520 and the UE C 1530 may receive the aforementioned allocation information from the UE A 1510 to receive the SL SRS from the UE D 1540. Here, for example, the UE A 1510 may transmit the allocation information to each of the UE B 1520 and the UE C 1530 through at least one of a PSCCH and a PSSCH, which is not limited to a specific embodiment. Also, the UE A 1510 may transmit the allocation information to the UE D 1540. That is, the UE A 1510 may deliver the allocation information as information required for the LTE D 1540 to transmit the SL SRS. Here, for example, the UE A 1510 may transmit the allocation information to the UE D 1540 through at least one of the PSCCH and the PSSCH, which is not limited to a specific embodiment. As described above, the UE D 1540 may transmit the SL SRS, and each of the UE A 1510, the UE B 1520, and the UE C 1530 may receive the SL SRS transmitted from the UE D 1540.

Then, each of the UE A 1510, the UE B 1520, and the UE C 1530 may perform measurement based on the SL SRS, and may acquire measurement information. Here, each of the UE B 1520 and the UE C 1520 may transmit the measurement information to the UE A 1510. Here, the measurement information may be at least one of TDOA and RSTD as a value that is measured by each UE based on the SL SRS, but may not be limited thereto. For example, the measurement information may be a measurement value itself or may be a location value of the UE D 1540 derived based on the measurement value, which may not be limited to a specific form. In more detail, the UE A 1510 may acquire a measurement value that is measured based on the SL SRS from each of the UE B 1520 and the UE C 1530 as the measurement information. Here, the UE A 1510 may acquire the location value of the UE D 1540 based on the measurement values acquired from the UE B 1520 and the UE C 1530.

As another example, the UE A 1510 may acquire the location value of the UE D 1540 derived from the measurement values measured based on the SL SRS from the UE B 1520 and the UE C 1530, as the measurement information, which may not be limited to a specific embodiment. In the aforementioned manner, positioning may be performed.

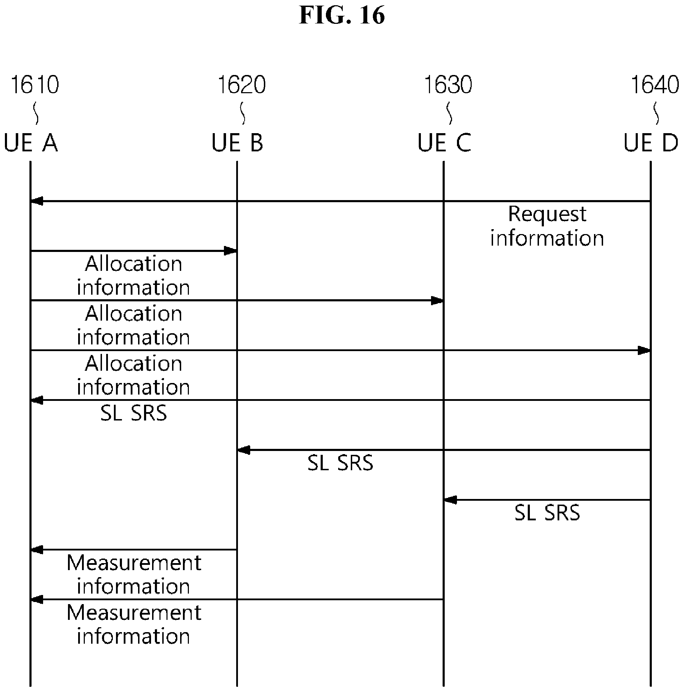

FIG. 16 illustrates a method of performing sidelink-based positioning, applicable to the present disclosure.

Referring to FIG. 16, sidelink-based positioning may be performed. As a specific example, in FIG. 16, positioning base performed based on sidelink communication between UEs without base station control. For example, a location of a UE D 1640 may be measured based on sidelink-based positioning. Here, for example, sidelink communication may be possible between a UE A 1610 and a UE B 1620, sidelink communication may be possible between the UE A 1610 and a UE C 1630, and sidelink communication may be possible between the UE A 1610 and the UE D 1640. As another example, the UE A 1610 may perform group communication-based sidelink communication based on groupcast. For example, the UE A 1620 may be a master terminal in group communication, but is not limited to the aforementioned embodiment. Also, for example, the following description is made based on the aforementioned situation for clarity, but may not be limited thereto. Referring to FIG. 16, the UE D 1640 may transmit request information to the UE A 1610. Here, the request information may be information requesting location measurement of the UE D 1640, but is not limited to the aforementioned embodiment.

Then, the UE A 1610 may generate allocation information. Here, the allocation information may be information necessary for the UE D 1640 requiring location measurement to transmit an SL SRS. For example, the allocation information may include at least one of resource information and sequence information required for the UE D 1640 to transmit the SL SRS and may further include other information.

Here, for example, the UE A 1610 may transmit the allocation information to each of the UE B 1620 and the UE C 1630. Here, the allocation information may be information necessary for the UE D 1640 requiring location measurement to transmit the SL SRS. For example, the allocation information may include at least one of resource information and sequence information required for the UE D 1640 to transmit the SL SRS and may further include other information. That is, each of the UE B 1620 and the UE C 1630 may receive the aforementioned allocation information from the UE A 1610 to receive the SL SRS from the UE D 1640. Here, for example, the UE A 1610 may transmit the allocation information to each of the UE B 1620 and the UE C 1630 through at least one of a PSCCH and a PSSCH, which is not limited to a specific embodiment. Also, the UE A 1610 may transmit the allocation information to the UE D 1640. That is, the UE A 1610 may deliver the allocation information as information required for the UE D 1640 to transmit the SL SRS. Here, for example, the UE A 1610 may transmit the allocation information to the UE D 1640 through at least one of the PSCCH and the PSSCH, which is not limited to a specific embodiment. As described above, the UE D 1640 may transmit the SL SRS, and each of the UE A 1610, the UE B 1620, and the UE C 1630 may receive the SL SRS transmitted from the UE D 1640.

Then, each of the UE A 1610, the UE B 1620, and the UE C 1630 may perform measurement based on the SL SRS and may acquire measurement information. Here, each of the UE B 1620 and the UE C 1620 may transmit the measurement information to the UE A 1610. Here, the measurement information may be at least one of TDOA and RSTD as a value that is measured by each UE based on the SL SRS, but may not be limited thereto. For example, the measurement information may be a measurement value itself or may be a location value of the UE D 1640 derived based on the measurement value, which may not be limited to a specific form. In more detail, the UE A 1610 may acquire measurement values measured based on the SL SRS from the UE B 1620 and the UE C 1630 as measurement information. Here, the UE A 1610 may acquire the location value of the UE D 1640 based on the measurement values acquired from the UE B 1620 and the UE C 1630.

As another example, the UE A 1610 may acquire the location information of the UE D 1640 derived from the measurement values measured based on the SL SRS from the UE B 1620 and the UE C 1630 as the measurement information, which may not be limited to a specific embodiment. In the aforementioned manner, positioning may be performed.

As another example, as described above, referring to FIGS. 11 to 16, allocation information may include at least one of sequence information and resource information on an SL SRS transmitted from a UE D. Here, for example, regarding SL SRS sequence generation, the existing SRS sequence may be considered and the existing SRS sequence may be derived based on Equation 3 and Equation 4.

Also, for example, a sequence group u for SRS sequence may be as shown in Equation 6 below. Here, the sequence group u and sequence number v may be determined based on groupOrSequenceHopping as upper layer parameters. Here, for example, $l'$ may be $l' \in \left\{0, 1, \ldots, N_{\text{symb}}^{\text{SRS}} - 1\right\}$ as an OFDM symbol number included in an SRS resource.

[Equation 6]

$$u = \left(f_{\text{gh}}\left(n_{\text{s,f}}^{\mu}, l'\right) + n_{\text{ID}}^{\text{SRS}}\right) \bmod 30$$

Also, for example, when a groupOrSequenceHopping parameter is set to "neither", the sequence group and the sequence number may be set as in Equation 7 below. That is, neither the sequence group and the sequence number may be used. On the contrary, when the groupOrSequenceHopping parameter is set to "groupHopping", group hopping may be applied while sequence hopping may not be applied, which may be as shown in Equation 8 below. Here, an initial value $c_{\text{init}}$ of pseudo-random sequence c(i) may be $n_{\text{ID}}^{\text{SRS}}$ at a radio frame start point of each initial value.

[Equation 7]

$$f_{\text{gh}}\left(n_{\text{s,f}}^{\mu}, l'\right) = 0$$

$$v = 0$$

[Equation 8]

$$f_{\text{gh}}\left(n_{\text{s,f}}^{\mu}, l'\right) = \left(\sum_{m=0}^{7} c\left(8\left(n_{\text{s,f}}^{\mu} N_{\text{symb}}^{\text{slot}} + l_0 + l'\right) + m\right) \cdot 2^m\right) \bmod 30$$

$$v = 0$$

Also, for example, when the groupOrSequenceHopping parameter is set to "sequenceHopping", only sequence hopping may be applied and group hopping may not be applied, which may be expressed as shown in Equation 9 below.

Here, an initial value $c_{\text{init}}$ of pseudo-random sequence c(i) may be $n_{\text{ID}}^{\text{SRS}}$ at a radio frame start point of each initial value.

[Equation 9]

$$f_{\text{gh}}\left(n_{\text{s,f}}^{\mu}, l'\right) = 0$$

$$v = \begin{cases} c\left(n_{\text{s,f}}^{\mu} N_{\text{symb}}^{\text{slot}} + l_0 + l'\right) & M_{\text{sc},b}^{\text{SRS}} \geq 6 N_{\text{sc}}^{\text{RB}} \\ 0 & \text{otherwise} \end{cases}$$

Here, for example, the aforementioned groupOrSequenceHopping parameter may be included in an SRS-Resource IE or an SRS-PosResource IE. Also, the SRS sequence ID, $n_{\text{ID}}^{\text{SRS}}$, may be determined based on sequenceID as an upper layer parameter. Here, when the sequenceID parameter is included in the SRS-Resource IE, $n_{\text{ID}}^{\text{SRS}} \in \{0, 1, ..., 1023\}$. On the contrary, when the sequenceID parameter is included in the SRS-PosResource IE, $n_{\text{ID}}^{\text{SRS}} \in \{0, 1, ..., 65535\}$. That is, in the case of generating the SRS sequence for positioning, the SRS sequence ID range may be wider.

For example, as described above with reference to FIGS. 11 to 16, an SRS sequence ID of an SL SRS used for sidelink positioning may be transmitted from a base station to a UE through upper layer signaling, such as upper layer signaling (e.g., RRC), similar to the existing SRS for positioning. Here, the SRS sequence ID of the SL SRS may include 16 bits as $n_{\text{ID}}^{\text{SRS}} \in \{0, 1, ..., 65535\}$, which is the same as before. Here, sequence ID information of the SL SRS may be included in allocation information as sequence information on the SL SRS transmitted for location measurement of a UE D in FIGS. 11 to 16. Here, for example, the sequence ID of the SL SRS may be allocated from remaining sequence IDs, excluding an SRS ID allocated for a UL SRS, to be distinguished from the existing SRS for positioning.

As another example, the aforementioned sequence ID information of an SRS may be provided from a base station to a UE through upper layer signaling (e.g., RRC). Therefore, in FIGS. 11 to 14, the UE may acquire sequence ID information. However, as shown in FIGS. 15 and 16, the UE that performs sidelink communication without control of the base station may not acquire SRS ID information. Therefore, in FIGS. 15 and 16, the UE needs to determine an SRS ID by itself.

Here, for example, an SRS ID may be determined based on N D of a UE D. For example, as described above, a UE A may configure the SRS ID based on $N_{\text{ID}}^X$ received from the UE D based on sidelink communication between the UE A and the UE D. Here, for example, $N_{\text{ID}}^X$ may be the same as Equation 10 below as a decimal number of CRC of a PSCCH associated with a PSSCH, but may not be limited thereto. Here, $p_i$ denotes each parity bit and L denotes the number of parity bits.

[Equation 10]

$$N_{\text{ID}}^{\text{X}} = \sum_{i=0}^{L-1} p_i \cdot 2^{L-1-i}$$

Here, $N^{\text{X}}_{\text{ID}}$ for the UE D may use a 16-bit SRS ID calculated based on modular $2^{16}$ as a modular function.

As another example, the SRS ID may be configured based on $N^{\text{X}}_{\text{ID}}$ bits. For example, since the SRS ID is applied based on a modular function in Equation 6, the SRS ID may be configured with $N^{\text{X}}_{\text{ID}}$ bits.

As another example, a case of using an ID of the UE A may be considered. Here, the UE A's ID may be '$n^{\text{SA}}_{\text{ID}}$ (sidelink group destination identity)' as ID included and indicated in sidelink assignment (SA), but may not be limited thereto. Here, when the SRS ID is configured based on 16 bits, the SRS ID may include 16 bits by adding 0 to $n^{\text{SA}}_{\text{ID}}$. As another example, the SRS ID may be configured based on $n^{\text{SA}}_{\text{ID}}$ and since the SRS ID is applied based on a modular function, the SRS ID may be configured with $n^{\text{SA}}_{\text{ID}}$ bits.

As another example, as described above with reference to FIGS. 11 to 16, the allocation information may include at least one of sequence information and resource information on the SL SRS transmitted from the UE D. Here, for example, regarding SL SRS resource allocation information, the existing SRS resource allocation parameter may be considered. In more detail, a resource allocation parameter for an SL SRS included in the allocation information may be generated based on the aforementioned SRS-PosResourceSet and SRS-PosResource. For example, parameters in SL-SRS-PosResourceSet may include parameters based on parameters in SRS-PosResourceSet, as a resource set for the SL SRS for positioning. Also, for example, parameters in SL-SRS-PosResource may include parameters based on parameters in SRS-PosResource as resources for the SL SRS for positioning.

Here, SL-SRS PosResourceSet and SL-SRS PosResource need to be distinguished from the existing SRS PosResourceSet and SRS-PosResource that aim transmission to the base station. Considering this, SL-SRS PosResourceSet may be separately configured to be distinguishable from SRS PosResourceSet. Here, SL-SRS PosResourceSet may use resources excluding resources (SRS-PosResource) used by SRS PosResourceSets.

Hear, for example, as shown in FIG 11 to 14, when sidelink-based positioning is performed based on the base station under the control of the base station, the SRS resource for the sidelink and the SRS resource for the base station transmission may be allocated separately. However, for example, as shown in Fig. 15 and 16, when the UE generates allocation information without the control of the base station, an available resource (SL-SRS-PosResource) used in a resource (SL-SRS-PosResourceSet) configured separately from SRS resource to be transmitted to the base station may be pre-defined in the UE. Here, the UE may select a resource for SL SRS transmission from the available resources (SL-SRS-PosResource) based on the pre-defined setting.

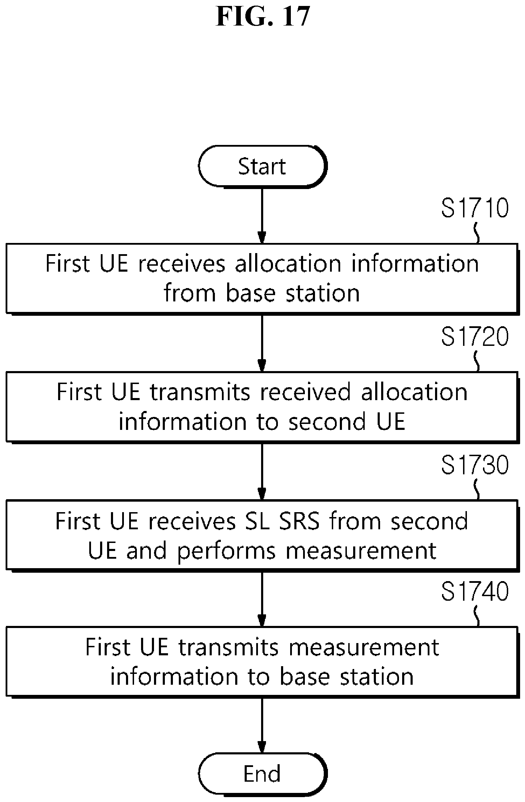

Figure 17 is a diagram illustrating a method to perform positioning based on the sidelink SRS applied in the present disclosure. Referring to Figure 17, the first UE and at least one or more UEs may exist within the base station coverage. For example, the first UE and each of the at least one of UEs may be RRC-connected with the base station 1110, but not limited to. Here, the position of the second UE may be measured based on sidelink-based positioning.

Here, for example, the first UE and each of the at least one or more UEs may receive allocation information from the base station. In this case, the allocation information may be the information required for the second UE to transmit SL SRS for positioning. For example, the allocation information may comprise at least one of the resource and sequence information required for the second UE to transmit the SL SRS, but may comprise more information.

Here, for example, the allocation information may be transmitted from the base station to the first UE and at least one or more UEs by upper-layer signaling (e.g. RRC). Then, the first UE may transmit the received allocation information to the second UE. (S1720) In this case, for example, the second UE may transmit SL SRS based on the received allocation information. Here, the first UE and each of the at least one or more UEs may receive the SL SRS transmitted from the second UE. The first UE may perform a measurement by receiving the SL SRS (S1730), and transmit the measurement information to the base station (S1740). Also, each of the at least one or more UEs may perform a measurement by receiving SL SRS from the second UE. Then, each of the at least one or more UEs may transmit the measurement information to the base station. In this case, the measurement information may be a value measured at each of the UEs based on the SL SRS, and be at least one of TDOA or RSTD, but may not be limited to. For example, the measurement information may be a value of the measurement itself or a position value of the second UE derived from the value of the measurement, which may not be limited to a specific form. Also, the base station may further transmit the measurement information to the location server, but may not be limited to. As described above, positioning may be performed.

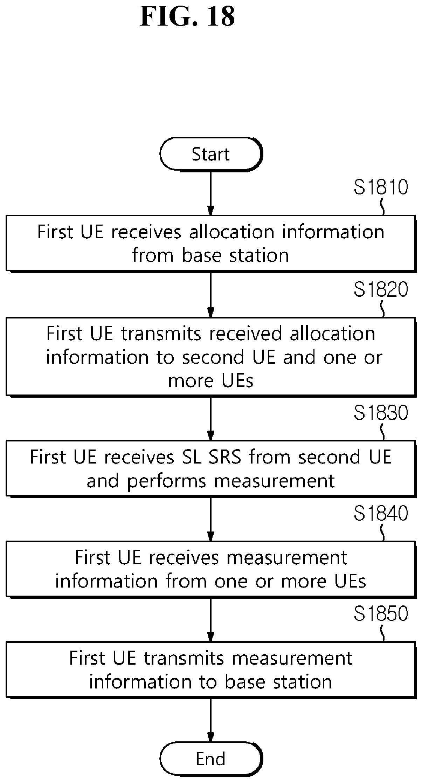

Figure 18 is a diagram illustrating a method to perform positioning based on the sidelink SRS applied in the present disclosure. For example, the first UE may be located within the coverage of the base station. The first UE may be a status of RRC-connected with the base station, but may not be limited to. Also, for example, the first UE may be capable of sidelink communication with the at least one or more UEs. In this case, for example, the first UE may receive allocation information from the base station (S1810). Then, the first UE may transmit the received allocation information to the second UE and each of the at least one or more UEs (S1820). In this case, the allocation information may be the information required for the second UE needed for positioning to transmit SL SRS. For example, the allocation information may comprise at least one of the resource and sequence information required for the second UE to transmit the SL SRS, but may comprise more information.

Here, for example, the allocation information may be transmitted from the base station to the first UE through upper-layer signaling (e.g. RRC). Also, for example, the allocation information may be allocated by a location server, and the allocated information may be transmitted to the first UE through a base station, which may not be limited to a specific example.

Then, the second UE may transmit SL SRS based on the allocation information received from the first UE. Here, the first UE and each of the at least one or more UEs may receive the SL SRS transmitted from the second UE and perform the measurements (S1830). Also, each of the at least one or more UEs may receive the SL SRS transmitted from the second UE and perform measurement. Then, each of the at least one or more UEs may then transmit the measurement information to the first UE. That is, the first UE may receive measurement information from each of the at least one or more UEs (S 1840). Then, the first UE may transmit measurement information to the base station. Here, the measurement information may be measured at each of the UEs based on the SL SRS, which may be at least one of TDOA or RSTD, but may not be limited to. For example, measurement information may be the measurement value itself or the position value of the second UE derived from the measurement, which may not be limited to a specific form. In more detail, the first UE and each of the at least one or more UEs may obtain the measurement value measured based on the SL SRS as measurement information. Here, the first UE may acquire the position value of the second UE based on the measurement value obtained from the at least one or more UEs. Then, the first UE may transmit the position value of the second UE to the base station as measurement information. In this case, the base station may report the measurement information to the location server as the position value of the second UE, and may not be limited to a specific example.

As another example, the first UE may acquire a measurement value measured based on SL SRS from the at least one or more UEs as the measurement information. Here, the first UE may transmit the measurement value measured based on the SL SRS from the first UE to the base station along with the acquired measurement information. Here, the base station may acquire the position value of the second UE based on the measured value in the first UE and each of the at least one or more UEs. For example, a base station may report measurement information to the location server as the position value of the second UE, which may not be limited to a specific example.

As another example, the first UE and each of the at least of one or more UEs may obtain the position value of the second UE derived from the measured value based on the SL SRS as measurement information, and it may be possible to transmit it to the base station. For example, the base station may report measurement information to the location server as the position value of the second UE, which may not be limited to a specific example. Through the above, positioning may be performed.

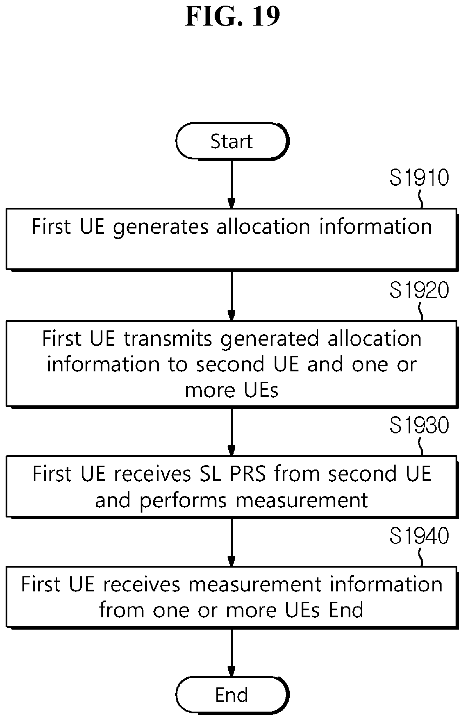

Figure 19 is a diagram illustrating a method to perform positioning based on the sidelink SRS applied in the present disclosure. Referring to Figure 19, positioning may be performed based on sidelink communication between UEs without control of base station. For example, the first UE may be capable of sidelink communication with at least one or more UEs. Here, the first UE may generate allocation information (1910). Here, the allocation information may be the information required for the second UE to transmit the SL SRS for positioning. For example, the allocation information may comprise at least one of the resource and sequence information required for the second UE to transmit the SL SRS, but may comprise more information.

Here, for example, the first UE may transmit the generated allocation information to the second UE and each of the at least one or more UEs. Then, the first UE may take measurements by receiving the SL SRS transmitted from the second UE (S1930). Also, each of at least one or more UEs may perform the measurements by receiving the SL SRS transmitted from the second UE. Then, the first UE may receive measurement information from each of the at least one or more UEs (1940). Here, the measurement information may be a value measured in each of the at least one or mor UEs based on the SL SRS and may be at least one of TDOA or RSTD, but may not be limited to. For example, measurement information may be the measurement value itself or the position value of the second UE derived from the measurement value, which may not be limited to a specific form. In more detail, the first UE may obtain measurement value from each of at the least one or more UEs measured based on the SL SRS as the measurement information. Here, the first UE may obtain the position value of the second UE through the measurement information obtained and the measurement value directly measured by the first UE.

As another example, the first UE may obtain the position value of the second UE derived from the measured value based on SL SRS from each of the at least one or more UEs as measurement information, which may not be specific to a specific example.

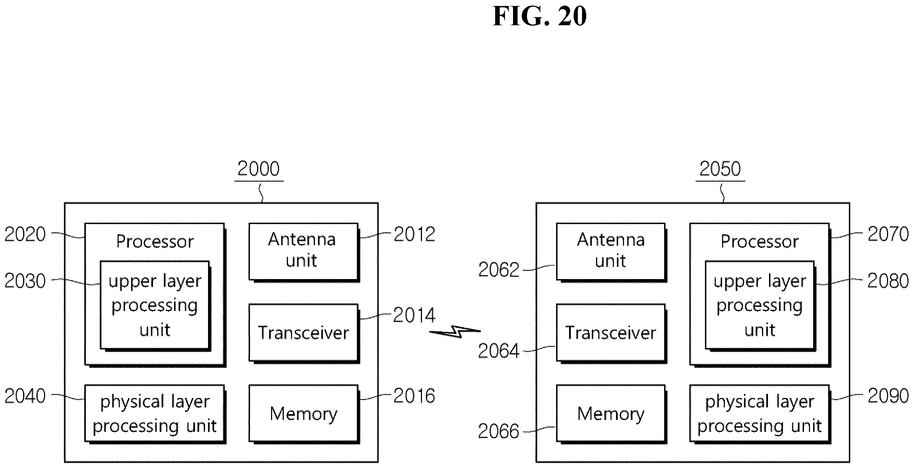

FIG. 20 is a diagram illustrating a configuration of a base station device and a terminal device according to the present disclosure may apply.

A base station device 2000 may include a processor 2010, an antenna device 2012, a transceiver 2014, and a memory 2016.

The processor 2020 may perform baseband-related signal processing and may include an upper layer processing unit 2030 and a physical (PHY) layer processing unit 2040. The upper layer processing unit 2030 may process an operation of a MAC layer, an RRC layer, or more upper layers. The PHY layer processing unit 2040 may process an operation (e.g., uplink received signal processing, downlink transmission signal processing, etc.) of a PHY layer. The processor 2020 may also control the overall operation of the base station device 2000, in addition to performing the baseband-related signal processing.

The antenna device 2012 may include at least one physical antenna. If the antenna device 2012 includes a plurality of antennas, multiple input multiple output (MIMO) transmission and reception may be supported. The transceiver 2014 may include a radio frequency (RF) transmitter and an RF receiver. The memory 2016 may store operation-processed information of the processor 2020, software, an operating system (OS), an application, etc., associated with an operation of the base station device 2000, and may include a component, such as a buffer.

The processor 2020 of the base station device 2000 may be configured to implement an operation of a base station in the embodiments set forth herein.

The terminal device 2050 may include a processor 2070, an antenna device 2062, a transceiver 2064, and a memory 2066. For example, the terminal device 2050 may communicate with the base station device 2000. As another example, the terminal device 2050 may perform sidelink communication with another terminal device. That is, the terminal device 2050 of the present invention refers to any device capable of communicating with at least one of the base station device 2000 and another terminal device and is not limited to communication with a specific device.

The processor 2070 may perform baseband-related signal processing and may include an upper layer processing unit 2080 and a PHY layer processing unit 2090. The upper layer processing unit 2080 may process an operation of a MAC layer, an RRC layer, or more upper layers. The PHY layer processing unit 2090 may process an operation (e.g., downlink received signal processing, uplink transmission signal processing, etc.) of a PHY layer. The processor 2070 may also control the overall operation of the terminal device 2050 in addition to performing the baseband-related signal processing.

The antenna device 2062 may include at least one physical antenna. If the antenna device 2062 includes a plurality of antennas, MIMO transmission and reception may be supported. The transceiver 2064 may include an RF transmitter and an RF receiver. The memory 2066 may store operation-processed information of the processor 2070, software, an OS, an application, etc., associated with an operation of the terminal device 2050, and may include a component, such as a buffer. For example, the operations of FIGS. 1 to 29 described above may be performed based on the base station 3000 and the terminal device 3050, and may not be limited to a specific example.

The various examples herein are to explain the representative aspects of the present disclosure instead of describing all the possible combinations and matters described in the various examples may independently apply or may apply through at least two combinations thereof.

Also, various examples of the present disclosure may be implemented by hardware, firmware, software, or combination thereof. In the case of implementation by hardware, the examples may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present invention includes a software or machine executable instructions (for example, operating system, application, firmware, program, etc.) for enabling to implement operations according to the methods of the various embodiments, and a device or a non-transitory computer-readable medium executable on a computer storing such a software or instructions.

INDUSTRIAL APPLICABILITY

The following matters may apply to other systems.

**Claims**

1. A method of performing sidelink positioning in a wireless communication system, the method comprising:

as an operation of receiving, by a first user equipment, UE, allocation information from a base station, receiving, by each of one or more UEs, the allocation information from the base station;
transmitting, by the first UE, the received allocation information to a second UE;
as an operation of receiving, by the first UE, sidelink sounding reference signal, SL SRS from the second UE, receiving, by each of the one or more UEs, the SL SRS transmitted from the second UE, and performing measurement based on the received SL SRS; and

as an operation of transmitting measurement information acquired based on the measurement to the base station, acquiring, by each of the one or more UEs, measurement information by performing measurement based on the SL SRS and transmitting the same to the base station.

2. A method of performing sidelink positioning in a wireless communication system, the method comprising:

receiving, by a first user equipment, UE, allocation information from a base station;
transmitting, by the first UE, the received allocation information to a second UE and each of one or more UEs;
receiving, by the first UE, an SL SRS transmitted from the second UE;
as an operation of performing, by the first UE, measurement based on the received SL SRS and acquiring measurement information, acquiring, by each of the one or more UEs, measurement information by performing measurement based on the SL SRS;
acquiring, by the first UE, the measurement information from the one or more UEs; and
transmitting the acquired measurement information to the base station.

3. A method of performing sidelink positioning in a wireless communication system, the method comprising:

generating, by a first user equipment, UE, allocation information;
transmitting, by the first UE, the generated allocation information to a second UE and one or more UEs;
receiving, by the first UE, a sidelink sounding reference signal, SL SRS transmitted from the second UE;
as an operation of performing, by the first UE, measurement based on the received SL SRS and acquiring measurement information, acquiring, by each of the one or more UEs, measurement information by performing measurement based on the SL SRS; and
acquiring, by the first UE, the measurement information from the one or more UEs.

# FIG. 1

(a)V2V OPERATION

(b)V2I OPERATION

(c)V2P OPERATION

# FIG. 2

(a)V2V OPERATION

(b)V2I OPERATION

(c)V2P OPERATION

# FIG. 3

(a)

(b)

# FIG. 4

5G sidelink

N-V2X

IoT & Public Sefety

Vehicle Platooning

Advanced Sensor

sidelink

Automatic Driving System

Automatic Driving

Remote Driving

Remote Driving System

5G sidelink

# FIG. 5

| Downlink frame *i* |
|:---:|

| Uplink frame *i* |
|:---:|

$N_{TA} \, T_s$

# FIG. 6

One sub frame

$N_{\text{sub frame}}^{\text{symbols}\mu}$ OFDM symbols

$k = N_{RB}^{\mu}\, N_{sc}^{RB} - 1$

Resource block

Resource element
$-(k,\bar{l})$ in resource grid
$-(k,l)$ in resource block

$N_{RB}^{\mu}\, N_{sc}^{RB}$ subcarriers

$N_{sc}^{RB}$ subcarriers

$k = 0$

$l = 0$

$\bar{l} = 14 \cdot 2^{\mu} - 1$

# FIG. 7

SFN(or DFN) period (10240ms)

V2X band

(a)

| 1 | 1 | 0 | 0 | 1 | 1 | 0 | 1 | 1 | • • • | 1 | 1 | 0 | 0 | 1 |

#0

Repetitions of
"slot indication of resource pool"

#$(10240 \times 2^u - 1)$

▨ Resource pool for V2X(only for time-domain)

SFN or DFN period (10240ms)

V2X band

• • •          • • •

#0                                    #$(10240 \times 2^u - 1)$

V2X band

• • •                    • • •          • • •

$t^{SL}_0$                    $t^{SL}_i$                    $t^{SL}_{Tmax-1}$

(b)

$+$

Repetition of length $L_{bit-map}$ bit-map

$L_{bit-map}$

$(b_0, b_1, \ldots, b_{L_{bit-map}-1})$          $L_{bit-map}$          • • •          $L_{bit-map}$

$L_{bit-map}$          $(b_0, b_1, \ldots, b_{L_{bit-map}-1})$

$(b_0, b_1, \ldots, b_{L_{bit-map}-1})$

V2X band

| 1 | 1 | 0 | 1 | • • • | 1 | 1 | 0 | 1 | 1 | 1 | 0 | 1 | • • • | 1 | 1 | 0 | 1 |

▨ Excepted slots within a SFN(or DFN) period
(Total d slots or d+d' slots)

▨ Resource pool for V2X(only for time-domain)

# FIG. 8

RB#($N^{UL}_{RB}-1$)

V2X slot

V2X band

"Number of sub-channels"

"Starting RB of sub-channel"

"sub-channel size"

RB#0

PSCCH(SA) for V2X(only for frequency-comain)

PSSCH(Data) for V2X(only for frequency-comain)

# FIG. 9

# FIG. 10

# FIG. 11

# FIG. 12

# FIG. 13

# FIG. 14

# FIG. 15

# FIG. 16

# FIG. 17

```
                    ┌─────────┐
                    │  Start  │
                    └────┬────┘
                         │                    S1710
                         ▼
    ┌────────────────────────────────────────┐
    │   First UE receives allocation information│
    │          from base station               │
    └────────────────────┬─────────────────────┘
                         │                    S1720
                         ▼
    ┌────────────────────────────────────────┐
    │   First UE transmits received allocation │
    │        information to second UE          │
    └────────────────────┬─────────────────────┘
                         │                    S1730
                         ▼
    ┌────────────────────────────────────────┐
    │    First UE receives SL SRS from second  │
    │      UE and performs measurement         │
    └────────────────────┬─────────────────────┘
                         │                    S1740
                         ▼
    ┌────────────────────────────────────────┐
    │    First UE transmits measurement        │
    │      information to base station         │
    └────────────────────┬─────────────────────┘
                         │
                         ▼
                    ┌─────────┐
                    │   End   │
                    └─────────┘
```

# FIG. 18

Start

S1810

First UE receives allocation information from base station

S1820

First UE transmits received allocation information to second UE and one or more UEs

S1830

First UE receives SL SRS from second UE and performs measurement

S1840

First UE receives measurement information from one or more UEs

S1850

First UE transmits measurement information to base station

End

# FIG. 19

Start

S1910

First UE generates allocation information

S1920

First UE transmits generated allocation information to second UE and one or more UEs

S1930

First UE receives SL PRS from second UE and performs measurement

S1940

First UE receives measurement information from one or more UEs End

End

**FIG. 20**

| | | |
|---|---|---|
| **INTERNATIONAL SEARCH REPORT** | International application No. | |
| | **PCT/KR2022/021366** | |

**A.    CLASSIFICATION OF SUBJECT MATTER**

**H04W 64/00**(2009.01)i; **H04W 24/10**(2009.01)i; **H04W 72/20**(2023.01)i; **H04W 4/40**(2018.01)i

According to International Patent Classification (IPC) or to both national classification and IPC

**B.    FIELDS SEARCHED**

Minimum documentation searched (classification system followed by classification symbols)

H04W 64/00(2009.01); G01S 5/02(2010.01); H04W 4/02(2009.01); H04W 4/029(2018.01); H04W 4/22(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크 사운딩 참조신호(sidelink sounding reference signal, SL SRS), 할당 (allocation), 구성(configuration), 측정(measurement), 보고(report)

**C.    DOCUMENTS CONSIDERED TO BE RELEVANT**

| Category* | Citation of document, with indication, where appropriate, of the relevant passages | Relevant to claim No. |
|---|---|---|
| X | WO 2021-057175 A1 (DATANG MOBILE COMMUNICATIONS EQUIPMENT CO., LTD.) 01 April 2021 (2021-04-01) See page 2, lines 16-17 and page 13, line 27 - page 15, line 17; claims 1 and 8; and figure 5. | 1-2 |
| Y | | 3 |
| Y | US 2021-0219103 A1 (HUAWEI TECHNOLOGIES CO., LTD.) 15 July 2021 (2021-07-15) See paragraphs [0203]-[0204]; and figure 16. | 3 |
| A | WO 2021-092813 A1 (NOKIA SHANGHAI BELL CO., LTD. et al.) 20 May 2021 (2021-05-20) See paragraphs [0048]-[0067]; and figure 2. | 1-3 |
| A | US 2015-0296359 A1 (QUALCOMM INCORPORATED) 15 October 2015 (2015-10-15) See paragraphs [0192]-[0193]. | 1-3 |

☑ Further documents are listed in the continuation of Box C.      ☑ See patent family annex.

| | |
|---|---|
| \*    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **23 March 2023** | **24 March 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/021366**

| C. | DOCUMENTS CONSIDERED TO BE RELEVANT | |
|---|---|---|
| Category* | Citation of document, with indication, where appropriate, of the relevant passages | Relevant to claim No. |
| A | US 2020-0128506 A1 (TELEFONAKTIEBOLAGET LM ERICSSON (PUBL)) 23 April 2020 (2020-04-23) See paragraphs [0068]-[0115]; and figure 2. | 1-3 |

Form PCT/ISA/210 (second sheet) (July 2022)

**INTERNATIONAL SEARCH REPORT**
**Information on patent family members**

International application No.

**PCT/KR2022/021366**

| Patent document cited in search report | | | Publication date (day/month/year) | Patent family member(s) | | | Publication date (day/month/year) |
|---|---|---|---|---|---|---|---|
| WO | 2021-057175 | A1 | 01 April 2021 | CN | 112584487 | A | 30 March 2021 |
| | | | | CN | 112584487 | B | 18 October 2022 |
| | | | | EP | 4037345 | A1 | 03 August 2022 |
| | | | | KR | 10-2022-0071243 | A | 31 May 2022 |
| | | | | US | 2022-0321293 | A1 | 06 October 2022 |
| US | 2021-0219103 | A1 | 15 July 2021 | CN | 112789912 | A | 11 May 2021 |
| | | | | CN | 112789912 | B | 24 May 2022 |
| | | | | EP | 3847857 | A1 | 14 July 2021 |
| | | | | WO | 2020-064120 | A1 | 02 April 2020 |
| WO | 2021-092813 | A1 | 20 May 2021 | CN | 114651492 | A | 21 June 2022 |
| | | | | EP | 4059283 | A1 | 21 September 2022 |
| US | 2015-0296359 | A1 | 15 October 2015 | US | 9462448 | B2 | 04 October 2016 |
| | | | | WO | 2015-160705 | A2 | 22 October 2015 |
| | | | | WO | 2015-160705 | A3 | 25 February 2016 |
| US | 2020-0128506 | A1 | 23 April 2020 | EP | 3808141 | A1 | 21 April 2021 |
| | | | | EP | 3808141 | A4 | 19 January 2022 |
| | | | | US | 11425676 | B2 | 23 August 2022 |
| | | | | WO | 2019-240635 | A1 | 19 December 2019 |

Form PCT/ISA/210 (patent family annex) (July 2022)